(19) Europäisches Patentamt
European Patent Office
Office européen des brevets

(11) **EP 2 825 920 B1**

(12) **EUROPEAN PATENT SPECIFICATION**

(45) Date of publication and mention
of the grant of the patent:
**20.01.2021 Bulletin 2021/03**

(21) Application number: **13725003.1**

(22) Date of filing: **09.05.2013**

(51) Int Cl.:
*G05B 13/04* *(2006.01)*

(86) International application number:
**PCT/US2013/040363**

(87) International publication number:
**WO 2013/170041 (14.11.2013 Gazette 2013/46)**

(54) **APPARATUS AND METHOD FOR AUTOMATED DATA SELECTION IN MODEL IDENTIFICATION AND ADAPTATION IN MULTIVARIABLE PROCESS CONTROL**

VORRICHTUNG UND VERFAHREN ZUR AUTOMATISIERTEN DATENAUSWAHL IN EINER MODELLIDENTIFIKATION UND -ANPASSUNG IN EINER MULTIVARIABLEN PROZESSSTEUERUNG

APPAREIL ET PROCÉDÉ DE SÉLECTION AUTOMATISÉE DE DONNÉES DANS L'IDENTIFICATION ET L'ADAPTATION DE MODÈLE DANS UNE COMMANDE DE TRAITEMENT À MULTIPLES VARIABLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.05.2012 US 201261646095 P**

(43) Date of publication of application:
**21.01.2015 Bulletin 2015/04**

(73) Proprietor: **Aspen Technology Inc.**
**Bedford, MA 01730 (US)**

(72) Inventors:
• **ZHAO, Hong**
**Sugar Land, TX 77479 (US)**
• **HARMESE, Magiel, J.**
**Houston, TX 77082 (US)**

(74) Representative: **Style, Kelda Camilla Karen**
**Page White & Farrer**
**Bedford House**
**John Street**
**London, WC1N 2BF (GB)**

(56) References cited:
**GB-A- 2 409 293     US-A1- 2008 183 311**

EP 2 825 920 B1

**Description**

RELATED APPLICATION

This application claims the benefit of U.S. Provisional Application No. 61/646,095, filed on May 11, 2012, and is a continuation-in-part of U.S. Application No. 12/786,052, filed on May 24, 2010, which claims the benefit of U.S. Provisional Application No. 61/217,370, filed on May 29, 2009.

BACKGROUND OF THE INVENTION

Multivariable Predictive Control (MPC) is the most widely used advanced process control technology in process industries, with more than 5,000 worldwide applications currently in service. MPC, which is sometimes also referred to as multivariate control (MVC), employs a model predictive controller that relies on dynamic models of an underlying process, e.g., linear models obtained by system identification.

A common and challenging problem is that MPC control performance degrades with time due to inevitable changes in the underlying subject process, such as equipment modifications, changes in operating strategy, feed rate and quality changes, de-bottlenecking, instrumentation degradation, etc. Such degradation of control performance results in loss of benefits. Among all possible causes of control performance degradation, the process model's predictive quality is the primary factor in most cases. To sustain good control performance, the model's predictive quality needs to be monitored, and the model needs be periodically audited and updated.

To address the technically challenging problem of model quality auditing and online model identification and adaptation, the Assignee developed an innovative approach for model quality estimation and model adaptation (see U.S. Patent Application Publication No. US 2011/0130850 A1, the parent related application), and a new method for non-invasive closed loop step testing (see U.S. Provisional Application No. 61/596,459, filed on February 8, 2012) that expanded the automated closed loop step testing techniques in Assignee's U.S. Patent Nos. 7,209,793 and 6,819,964. Each of the above techniques help in monitoring model quality and generating informative plant test data in a more efficient way. Once the process data becomes available through either open/closed-loop plant tests or historical plant operation records, a necessary and also important step is data screening and selection for model quality estimation and model identification. There are two important reasons for performing data screening and selection. First, the process data received from open/closed-loop plant tests are costly due to not only the engineer's work during the designed plant testing, but also the intervention (interruption) to plant production. Therefore the usage of those plant test data should be maximized. Second, collected process time series data may contain segments of samples over periods such as unit/equipment shut-downs, measurement equipment errors, variable values at High/Low limits, control output saturated or frozen, etc. If these data are included in the calculation of model quality estimation or model identification, the results can be contaminated and become unreliable.

In industrial practice of the prior art, a control engineer spends hours to days viewing all the process variables in time series plots and visually finding those data samples unsuitable for model identification purpose. To exclude the found "bad" data samples, the control engineer manually marks such data segments in software as "bad data slices" through a pertinent user interface. For confirmation and double-check on whether there are any "bad data" missed manual slicing, the engineer tries a number of model identification runs until the identification algorithm goes through all the data without failures and the resulting models look normal and make sense from the engineer's view. A typical APC project may contain 50-200 process time series variables and the data collection window may cover a period of weeks to months. Conducting the data screening and selection task by hand may take an experienced engineer days to weeks of intensive work.

In addition, there are two other shortcomings by using the conventional approach to data screening and selection for model quality estimation and identification. One is that any of the marked "bad data slices" in a time series will cause a data loss of a large piece of good data (*e.g.,* one time to steady state (TTSS) for a FIR model and 40-60 samples for a subspace model) following the "bad data slice", as a side effect due to the required re-initialization. The other drawback is that a conventional approach is not suitable for frequent runs in an online application (such as that described in U.S. Patent Application Publication No. US 2011/0130850 A1) where a pre-scheduled automated data screening and selection operation is needed to serve plant testing monitoring. Once a process variable hits its High/Low limit, becomes saturated, or loses measurements, the automated data screening and selection module should alert the operator and report the situation timely, so that the engineer may take actions to make corrections/adjustments and avoid a time and data loss on the plant testing.

There have been some general data preprocessing methods reported in process model identification text books (e.g., Lennart Ljung, "System Identification - Theory for The Users" Second Edition, Prentice Hall, 1999), but there is no systematical method for automated data screening and selection. A recently reported method of data selection from historic data for model identification (Daniel Peretzki, Alf J. Isaksson, Andre Carvalho Bittencourt, Krister Forsman, "Data Mining of Historic Data for Process Identification", AIChE Annual Meeting, 2011) is focused on finding useful intervals by use of a Laguerre approximation model and limited to only single-input and single-output (SISO) PID (Proportional-Integral-Derivative Controller) loops. In industrial APC practice, based on Applicants' knowledge, automated data screening and selection has been APC (Process Control) engineers' "dream", where neither systematic solution nor commercial tools are available yet.

MacArthur at al. have presented an apparatus, method, and computer program for automated closed-loop identification of an industrial process in a process control system in their patent US 2008/0183311. In their patent they suggest that multiple models (such as multiple model structure-model order combinations) can be identified for a process, where the models are associated with a process to be controlled. One or more metrics (such as a prediction metric or rank) can then be determined for each of the models. At least one of the models can then be selected based on the one or more metrics. A final model for controlling the process can be provided (such as to a controller), where the final model is based on the at least one selected mode.

SUMMARY OF THE INVENTION

The innovation presented by Applicants herein address the above issues in the art. Applicants provide a new apparatus and method for automated data selection in model quality estimation and identification in multivariable process control.

Embodiments of the present invention provide a new apparatus and method to address the foregoing problems by (1) detecting and excluding datasets that are unsuitable for model quality estimation and model identification, and (2) repairing and patching certain datasets to maximize usage of data in an MPC application.

Embodiments provide expansion of the model quality estimation and model adaptation method in multivariable process control described by Assignee in:

Related parent patent Application, U.S. Publication No. US 2011/0130850 A1, published on June 2, 2011,
U.S. Application No. 13/760,949 Filed Feb. 6, 2013 (claiming the benefit of U.S. Provisional Application No. 61/596,459, filed on February 8, 2012), and
U.S. Patent No. 7,209,793, issued on April 24, 2007. Embodiments can be configured and executed to screen and select data for model quality estimation and model identification while minimizing negative impact of the undesirable data and maximizing the overall usage of available process data.

Embodiments provide several new automated data screening and selection techniques to select data suitable for model assessment and model re-identification.

Embodiments provide an innovative approach to testing and validating bad data segments found, which can help to minimize data loss.

Embodiments provide a novel technique to repair and patch certain bad data samples via an internal MISO (Multi-Input, Single-Output) model predictive method, which helps replace some bad data samples with model-based predictive values. In turn, this technique maximizes the overall data usage.

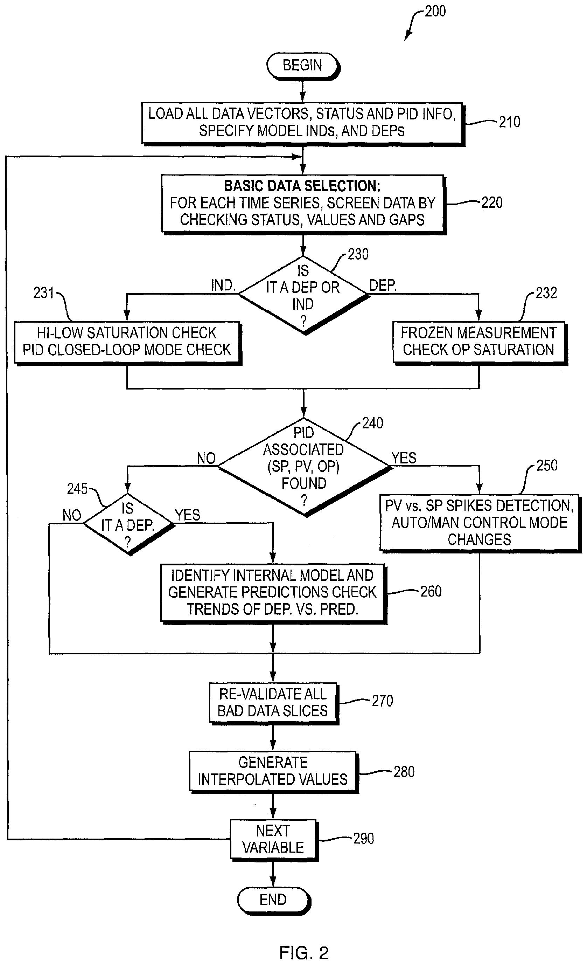

An embodiment is an apparatus comprising a four-tier automated data screening and selection system that can be configured and execute with a hierarchy and work flow as shown in Fig. 2.

A method of screening and selecting data automatically for model identification and model adaptation in a multivariable predictive controller (MPC), the method comprising: given an online controller having an existing model, in a processor: loading process data from a subject process and storing said process data in a database accessible by said model; characterized by; using a rule-based data selector, automatically detecting and excluding data segments of the stored process data that are unsuitable for model quality estimation and for model identification; validating the excluded data segments to minimize the data loss from bad data segments being excluded; repairing certain data segments of said stored process data to maximize usage of data in a MPC application; and updating said existing model using resulting process data as stored in the database, wherein said rule-based selector is configured to, screen a given time series variable as a dependent process variable or an independent process variable and apply a basic data screening filter to detect and mark data segments of the time series as good data or bad data according to given data quality measurement parameters; group time series variables according to their associated proportional-integral-derivative PID loop; compare process variables PV against their corresponding set points SP in each PID loop and applying data screening filters; generate predictions for dependent variables without a PID association using available independent variable measurements; evaluate said generated predictions for dependent variables without a PID association against corresponding available dependent variable measurements and applying data screening methods; and identify and generate bad data slices in the given time series variable using the data segments marked as bad data and a data slice generator to exclude said bad data segments from the time series.

An embodiment includes three different methods/modules of data screening and selecting and one data repairing method/module to serve as the automated data selection apparatus. These methods/modules are summarized as follows:

1. <u>Data quality based basic data screen and selection method:</u> Data segments are screened and invalid data are detected and marked as "bad" for exclusion based on online data quality status, data measurement availability, individual variable or controller on/off switching, and process events etc.

2. <u>PID control loop association based method:</u> Variables are grouped according to their associated PID control loops. For each PID loop, process variables (PV) are compared against their corresponding set points (SP). All PV data showing significant deviations from their SP, such as auto-off-mode, measurement frozen, spikes due to unknown disturbances and PID in manual mode etc., are marked as "bad data slices" and these data segments are sliced out (or otherwise filtered) from the datasets before running model quality estimation and model identification.

3. <u>Model predictive method:</u> For those dependent variables that have no PID associations, an internal model is built to generate dependent predictions by using the available independent variables' measurements. Then (1) model predictions are evaluated against their measurements, and (2) spikes and significant deviations in moving trends are assessed. The evaluated and assessed data may be marked as "bad data slices" and thus excluded from the dataset for model quality estimation and identification.

4. <u>Bad data repairing method :</u> In model identification, once a "bad data" segment (slice) is excluded from the dataset, an initialization of the identification algorithm causes a data loss of about a length of 40-60 data samples in the good data segment following the marked "bad data" slice. To avoid losing too many good data points, an interpolation method of the present invention is applied to all short data segments (slices) by replacing rather than deleting their measurements with interpolated values.

In an embodiment, using rule-based data selector for detecting and excluding data segments of process data that are unsuitable for model quality estimation and for model identification includes the steps of:

a. Collecting process data variables and storing collected process data variables in the database at a given sampling frequency as time series variables.

b. Loading data status, special values, and value limits of variables of the subject process with their corresponding time series from the database.

In an embodiment, validating excluded data segments to minimize the data loss from bad data segments being excluded includes the steps of:

i. Testing Bad Data segments of the time series not removed by a basic data filter by comparing the model qualities (MQ) when the Bad Dada segments are included and excluded in the model identification.

j. Confirming Bad Data segments as Bad Data based on the MQ comparison, otherwise unmarking candidate Bad Data segments.

In an embodiment, repairing certain time series to maximize usage of data in a MPC application includes the steps of:

k. For the given time series variable, selecting all confirmed Bad Data segments with length less than a half time to steady-state (TTSS) for interpolation.

1. Patching segments in the time series where data portions have been removed by the data slice generator with interpolated data segments.

m. Minimizing the negative impacts of replacing Bad Data segments with interpolated data segments by patching Bad Data slices with their interpolated slices with a smooth connection between the end points of a interpolated data segments.

In some embodiments, the process data variables of step (a) includes manipulated variables (MVs), measurements of control variables (CVs) of the subject process, calculated values of independent variables, calculated values of dependent variables, all data vectors of the subject process, and all PID controller loops.

In some embodiments, the basic data screening methods of step (c) include a PID controller output (OP) saturation and High/Low limit detector, a frozen signal/measurement detector if the given time series is a dependent variable, and a PID manual mode detector if the given time series is an independent variable.

In an embodiment, comparing process variables (PV) against their corresponding set points (SP) in each PID look and applying data screening filters is performing a PID loop association search and finding available SP, PV, and OP among all process variables, determining whether a PV and SP pair or a PV, SP and control output (OP) triple are associated with the time series in a PID loop, and, if PV and SP pair or PV, SP and OP triple is associated with the time series in the same PID loop, using a rule-based data selector to apply data screening filters to detect data sequences showing deviations from their SP and marking the corresponding segments of data as Bad Data.

In an embodiment, the data screening filters include a PV spike detector if the given time series is a dependent variable, a PID manual mode detector, and a SP in closed-loop mode detector if the given time series is an independent variable. An embodiment of evaluating the generated predictions for dependent variables without a PID association against their measurements and applying data screening filters (step (g)) is, if no PV and SP pair or PV, SP and OP triple is associated with the current time series variable in the same PID loop and the time series variable is a dependent process variable, using data screening filters to detect data segments showing spikes and deviations in moving trend and marking the corresponding segments of data as Bad Data according to given data screening filters. The data screening filters can include a PV spike detector and a trend mismatch/unknown disturbances detector.

In some embodiments, the trend mismatch/unknown disturbances detector includes generating a model prediction of the time series variable via a multiple-input single-output (MISO) model, calculating a prediction error for unknown disturbances, detecting if a control variable (CV) time series does not parallel the predicted MISO model values, detecting if a large sustained shift in the average value of the CV has occurred outside of the normal movement and determining if it is associated with the model prediction, and selecting for exclusion the data segments of the time series variable showing difference in trends beyond the prediction error and making selected data segments as Bad Data.

In another embodiment, testing Bad Data slices includes setting Bad Data segments as Candidate Bad Data segments and generating Good Data segments by excluding Candidate Bad Data segments for each time series variable, for a dependent variable, configuring a multiple-input single-output (MISO) model identification and loading the independent variables as inputs and the dependent variable as output in the MISO model, applying the generated Good Data segments to the configured MISO model and calculating a baseline model quality index (MQ) by performing a model quality assessment on the MISO model, and running a MISO case identification on a Candidate Bad Data segment of the data segments not removed by a basic data filter and calculating a candidate MQ by performing a model quality assessment on the MISO model corresponding to the Candidate Bad Data segment.

In yet another embodiment, confirming Candidate Bad Data segments as Bad Data includes, given a tunable parameter as a threshold, marking Candidate Bad Data segment as a Good Data segment if difference between baseline MQ and candidate MQ is within the tunable threshold and removing corresponding data slices from a list of Bad Data slices.

In another embodiment, patching segments in the time series where data portions have been removed by the data slice generator with interpolated data segments includes, if the time series variable is an independent variable, checking the Good Data segments adjacent to the selected Bad Data segments to determine if the Good Data sample values before a Start Point and after a End Point of a Bad Data segment are within a given threshold, and, if true, creating an interpolation slice by linear interpolation and replacing the selected Bad Data segments with the interpolation slice. If the selected time series variable is a dependent variable, configuring a MISO model case with the dependent variable and associated independent variables, and running a MISO identification case using the resultant MISO model to generate a model prediction on the dependent variable, and creating an interpolated slice for Bad Data segments if model predictive values are available for the Bad Data segment. If the time series variable is a dependent variable, checking the Good Data segments adjacent to the selected Bad Data segments to determine if the calculated average values over a given length before the Start Point and after the End Point of a Bad Data segment are within the given threshold, and if true, creating an interpolation slice by linear interpolation and replacing the selected Bad Data segments with the interpolation slice, the interpolation slice smoothly connected to the Good Data segments.

BRIEF DESCRIPTION OF THE DRAWINGS

The foregoing will be apparent from the following more particular description of example embodiments of the invention, as illustrated in the accompanying drawings in which like reference characters refer to the same parts throughout the different views. The drawings are not necessarily to scale, emphasis instead being placed upon illustrating embodiments of the present invention.

FIG. 1 is a MPC system diagram that an embodiment of the present invention is applied to.

FIG. 2 is a workflow diagram of the automated data screening and data selection apparatus of FIG. 1.

FIG. 3 is a flow diagram of a data slice generator of embodiments.

FIG. 4 is a schematic illustration of a data graph that embodiments automatically read plant test/operational data status and generate good and bad data segments.

FIG. 5 is a schematic illustration of a data graph from which embodiments perform data repair to gaps in data, due to removal of bad data, by interpolation across remaining good data.

FIG. 6 is a schematic illustration of a data graph having measurement values at their high and low limits that embodiments detect and segment as inappropriate for model identification.

FIG. 7 is a schematic illustration of a data graph from which embodiments detect instrument saturation.

FIG. 8 is a schematic illustration of a data graph from which embodiments detect frozen signal/measurement.

FIGS. 9A and 9B are schematic illustrations of data graphs from which embodiments detect significant spikes, disturbances or changes in operating point in process variables of the PID loops.

FIG. 10 is a schematic illustration of a data graph from which embodiments detect when a PID loop is in cascade for a sufficiently long period of time to conclude that this data will degrade the accuracy of model identification results.

FIG. 11 is a schematic illustration of a data graph from which embodiments detect when a PID loop output is saturated such that a process variable is no longer able to follow the corresponding set point.

FIG. 12 is a schematic illustration of a data graph from which embodiments detect when a PID loop output has been switched to manual mode and the corresponding set point is now tracking the process variable.

FIG. 13 is a schematic illustration of a data graph from which embodiments detect whether the PID process variable is not broadly following the set point trend and is moving in an opposite direction.

FIG. 14 is a schematic illustration of a data graph from which embodiments detect whether controlled variables do not show parallel movement to the predictions.

FIG. 15 is a schematic illustration of a data graph from which embodiments detect that a large sustained shift in the average value of a controlled variable (CV) has occurred outside of the normal movement, which is not explained by the CV prediction indicating a missing independent variable.

FIG. 16 is a schematic illustration of a data graph from which embodiments detect bad CV data and replace these bad data segments with predicted data without causing discontinuities in the repaired CV sequence.

FIG. 17 is a schematic illustration of a data graph from which embodiments determine the subset of data where PID modes were correctly maintained and no saturation occurred.

FIGS. 18A - C are schematic illustrations of a graphical user interface allowing users to add, delete and modify bad data slices in embodiments.

FIG. 19 is a block diagram of a computer network in which embodiments of the invention are implemented to serve one or more process units.

## DETAILED DESCRIPTION OF THE INVENTION

A description of example embodiments of the invention follows.

Embodiments provide expansion of model quality estimation and model adaptation in multivariable process control techniques described in related parent application (U.S. Patent Application Publication No. US 2011/0130850 A1 by

Assignee). Embodiments can be configured and executed to screen and select required data for model quality assessment and/or model re-identification in the systems of the parent disclosure, while minimizing the intensive work on data selection and preparation commonly done by a process control engineer manually. Accordingly, the present invention provides an improvement over the prior state of the art.

Embodiments provide a new apparatus and method for screening and selecting plant test/operational data automatically for online or offline model identification and online model adaptation in multivariable predictive controller (MPC) applications. Different modes of operation are provided in embodiments, namely: Basic Data Screen mode, PID Loop Data Selection mode, Model Predictive Data Selection mode, Data Slices Validation mode, and Data Repairing mode. Below, an overview of system work flow and system elements are provided, followed by a discussion of operational modes, process modules/methods and mathematical details.

As used herein, the term "data screening and selection" may generally be used synonymously with data filtering, segmentation and the like.

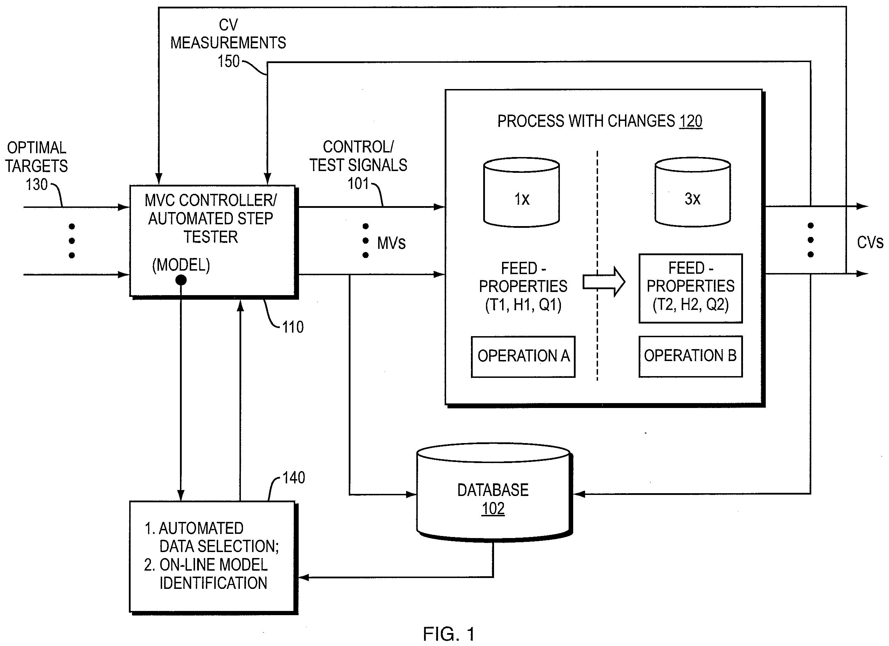

Fig. 1 is a block diagram of a MPC control system embodying the present invention. An MPC controller 110 controls a subject dynamical process 120 (such as that of a processing plant) based on optimal targets 130. The controller 110 includes an automated tester to perturb the process 120 in an embodiment. While Fig. 1 shows the controller and the tester together as 110, it should be understood by one of ordinary skill in the art that in another embodiment, a separate controller and tester may be provided. The controller 110 sends control/test signals 101 that set the values of manipulated variables (MVs) of the subject process 120. The MVs are independent variables in the sense that they can be set as desired to perturb the process and to control the controlled variables (CVs) within their constraints set and operation limits. Measurements of control variables (CVs) 150 resulting after perturbation are fed back to the controller 110. Control variables are so named because they are controlled through the manipulated variables; thus, the CVs are dependent variables that depend on the MVs. A real-time database 102 is used to store historical data regarding the MVs and the corresponding CVs. Although multiple optimal targets 130, MVs, and CVs 150 are shown in Fig. 1, it should be understood that there may be a single optimal target, MV, and/or CV.

An automated data selection and online model identification module 140 selects only the valid and informative data series in segments, and identifies a whole or a subset of the multi-input multi-output (MIMO) model of controller 110 based on selected inputs and outputs data from the process 120 and the database 102. The module 140 may be part of performance diagnostics which diagnose performance of the controller model as described in parent related U.S. Patent Application No. 12/786,052 (by Assignee). In turn, module 140 updates (adapts) the model to improve performance.

Fig. 2 is a flow diagram depicting the major work flow in an embodiment of the invention. The automated data screen and selection apparatus 200 starts its operation 210 with loading all controller 110 relevant data sequences or time series. That is, apparatus 200 collects data related to MVs 101 and measurements of CVs 150 and stores the collected data into the database 102 at a specified sampling frequency, usually the same as used by the MPC controller 110. The data may also include calculated values of independent variables and dependent variables collected from process 120 and stored in database 102.

Apparatus 200 executes its task in a sequential way. For each time series (or the sampled values of a variable over time), Basic Data Selection method/module 220 is first applied based on the variable associated data sample quality. In this module 220, all recorded data status, special values and High/Low value limits of variables are loaded into the apparatus 200 together with the time series values. An independent/dependent variable attribute check 230 on this time series of data is performed and corresponding data screening criteria are applied. For instance, if the subject data corresponds to dependent process variables, then method 232 detects data segments with frozen measurements and controller output (OP) saturation (values that have reached the High/Low limits and stay there for a long time). Method 232 marks the detected data segments as "bad data" slices. If the subject data corresponds to independent process variables, then method 231 detects data samples with High/Low saturation or with set points (SP) in "tracking" process variable (PV) mode. This typically occurs when a PID loop is in manual (MAN) mode. Method 231 then selects the detected data segment as "bad data" slices for exclusion.

After Basic Data Screening and Selection module/methods 220 described above, the remaining good data segments of the time series is passed to 240 for a PID loop association search among all loaded available time series of data from 210. Decision junction 240 determines whether a PV and SP pair or a PV, SP and OP triple are associated with the current time series in a same PID loop. If so, then a PID loop based data screen and selection method/module 250 starts to execute. If the PV and SP are available, a time series of PID loop control error $\{e(t)\}$ is created and used to detect PV spikes as described later.

In module 250, additional data screening is performed if the selected time series is from a Dep. (dependent process variable) and is also an OP (output) in a PID loop. Once a constant OP value over a time window is detected by screening OP changes, module 250 concludes that the PID loop is in manual mode. In such a case, the unchanged dependent variable may lead to wrong conclusions in model quality estimation or model identification. Therefore, module 250 marks the corresponding segment of data samples as "bad data" slices.

When neither pair nor triple PID associated variables is found in 240, and the selected time series is tested as a Dep. (dependent process variable) in 245, a model predictive data screen and selection module/method 260 is used to further assist detecting unknown disturbances.

An internal multi-input, single-output (MISO) model identification is performed in module 260, where the inputs are those defined independent variables in the controller model and the single output is the currently selected variable (time series). A model prediction of the selected time series is generated via the internally identified MISO model. Corresponding prediction error $\{pe(t) = CV(t)-CVPred(t)\}$ is calculated for unknown disturbances data screening and detection in the work flow.

A module/method that detects when the C V does not show parallel movement to those predicted values is used in 260, and module 260 selects for exclusion those data segments showing significant differences in trends. Module 260 marks the selected data segments as "unknown disturbances."

A bad data slices validation module/method 270 is called after all bad data segments have been created from 210 through 260. Due to the required reinitialization after each "bad data" or excluded data segment (slice) on data assembly for model identification, many good data points can become useless. When the number of "bad" data slices increase, the "good" data samples used for initialization become very "expensive". To reduce this kind of high "cost" initialization, the present invention implements two strategies. One is to re -validate all "candidate" bad data slices by using the Assignee's techniques previously described in the parent related US Application no. 12/786,052. In module/method 270, each of the candidate "bad" data slices is tested by comparing the model qualities when the tested "bad" data segment is included in the model identification to that of when the tested "bad" data segment is excluded in the model identification. If the model quality decreases significantly by a measure of MQ (model quality) index, then the tested candidate "bad" data segment is confirmed as "bad". Otherwise, module 270 unmarks the "bad" data segment and removes that data segment from the "bad data slice" list.

Another strategy to minimize the negative impacts created by "bad data slices" is to generate interpolated values patching the short "bad data slices" (i.e., segments where data portions have been removed). A module/method 280 generates MV interpolation values and CV predictions and patches the selected "bad" data slices. Module 280 is formed of two elements, one is a MISO identification engine and the other is an algorithm that patches the short "bad" data slices through a "smooth" connection between the two end-points of two neighborhood good data points. Each of these elements is further detailed below.

The foregoing process 220-280 is repeated on a next variable 290 as illustrated in Fig. 2.

**Components of the Apparatus 200**

Multiple components for carrying out the above methods of automated data screening and selection are provided in the embodiments. These include:

a rule-based data selector,

a data-slice generator,

a PV spike detector,

an OP saturation and High/Low limit detector,

a frozen signal/ measurement detector,

a PID manual mode detector,

a SP in closed-loop mode detector,

a trend mismatch/unknown disturbances detector,

a slice validation module using MQ, and

a slice reparation/patch module.

Each of these components is configured as follows. It is understood that other components and configurations are in the purview of the skilled artisan given this description.

**A Common Rule-Based Data Selector:** To automate the process of data screening and selection in various cases and under different rules/criteria, a common rule-based data marker/selector is provided. For a given time series, a list of data-sample- status-flags are created internally, which memorizes each data sample's status-mark. The status flags can be set for any rule-based criterion. For example, the following rules will "mark" a list of samples' status flags:

**Table 1.**

| Status | Criterion | Flag value | Comments/Ref. Figures |
|---|---|---|---|
| Good | STA=0 | 0 | Default value |
| Bad | STA = -1 | -1 | Fig. 4 |
| Off | STA = -2 | -1 | Fig. 4 |
| Invalid value | Value = -9999 | -1 | Fig. 4 |
| Missing value | Value = -10001 | -1 | Fig. 4 |
| Over H/L limits | Value > H limit or Value < L limit | -1 | Fig. 6 |
| OP Saturation | Value = Constant at a H/L operational limits | -1 | Fig. 7 and Fig.11 |
| Signal Frozen | Value = Constant for a long period, e.g. (T>1/4TTSS) | -1 | Fig. 8 |
| PV Spikes | $|e(t)| > k*STD$ | -1, -2, -3 | FIGS. 9A and 9B |
| SP tracks PV (PID in MAN mode) | $SP(t)-PV(t) < \varepsilon$ | -1 | Fig. 12 |

(continued)

| Status | Criterion | Flag value | Comments/Ref. Figures |
|---|---|---|---|
| No SP Step moves | *dSP(t) !=0* | -1 | Fig. 10 |
| PV_trend != SP_trend | *dSP(t-k) -dPV(t-k) >$\gamma$* | -1 | Fig. 13, Unknown disturbances |
| PV_trend != PVpred_trend | *dPVpred(t-k)-dPV(t-k) >$\gamma$* | -1 | Fig. 14,15, Unknown disturbances |
| Patched with Interpolated Values | | +1 | FIGS. 5 and 16. |

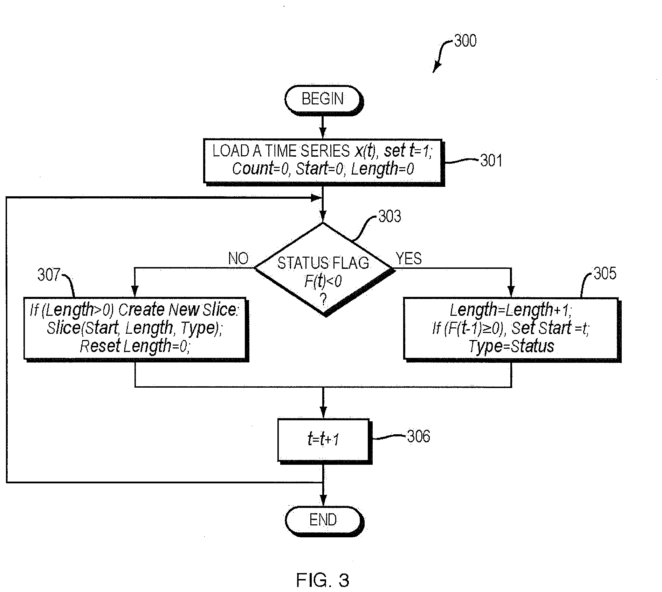

**A Common Data Slice Generator:** Based on the Flag values, continuous "bad data" samples with the same status are converted into (marked as) categorized "bad data" slices. The common data slice generator 300 serves to create all bad data slices under different criteria. FIG. 3 is illustrative of one embodiment of a data slice generator 300.

Data slice generator 300 begins by loading a time series of data *x(t)* such as that illustrated in FIG. 3 and having a corresponding set of Flag values (i.e., from Table 1) as set by the Rule-based Data Selector. At step 301, data slice generator 300 sets time *t* = 1 and initial values for parameters *count, start* and *length.* If a Status Flag value is negative (i.e., less than zero), then decision junction 303 proceeds with steps 305 and 306 which increment through the data points that form the "bad data" slice. If the Status Flag value is non-negative (i.e., zero or positive), then decision junction 303 proceeds with steps 306 and 307 which create/define a new "bad data" slice.

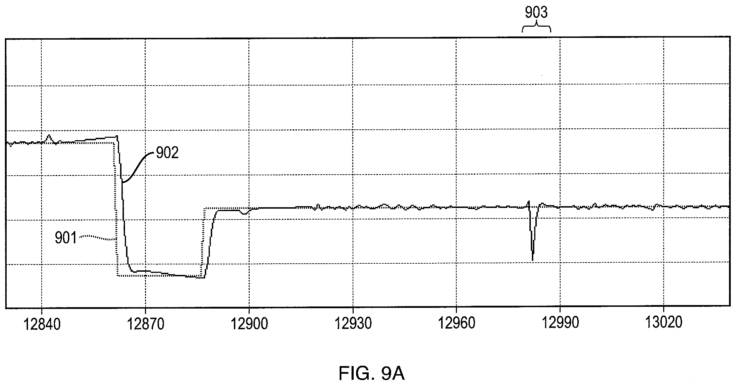

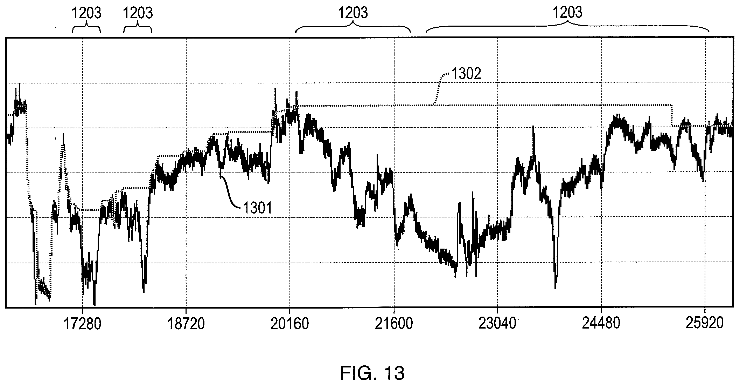

**A PV Spike Detector:** If the given time series is a Dep (dependent variable) and it is also a PV (process variable) in a PID loop, then PV spike patterns may be detected. When the corresponding SP (set point) of this time series of data is found available in 240 (FIG. 2), a new time series of control error $\{e(t)\}$ is calculated by subtracting PV values from SP *(i.e., e(t)=SP(t)-PV(t)),* and is used for detection of PV spikes due to either instrument measurement error (*e.g.*, short-term offline/reset/calibration) or unknown large disturbances into the process 120. Thus PV Spike Detector looks for and detects data patterns shown in Figs 9A-9B and 13.

A statistical calculation on the new time series $\{e(t)\}$ results in mean $\overline{E}$ and standard deviation $STD_E$:

$$\overline{E} = \frac{1}{M} \sum_{S=1}^{M} \left( \frac{1}{N_S} \sum_{t=1}^{N_S} e(t) \right), \quad STD_E = \left( \frac{1}{N-1} \left( \sum_{t=1}^{N_S} \left( e(t) - \overline{E} \right)^2 \right) \right)^{1/2}$$

where the S represents a "good" data segment (also called data slice),
$N_S$ and $N$ are the total number of samples of each "good" data segment and of all "good" data segments.

All significant spikes on PV are detected based on the following criterion:

$$PV(t) = spikes, \quad \text{if } |e(t)| \geq k \cdot STD_E \quad k \in (1, 6) \quad k_0 = 3.0;$$

where $k_0$ is a default value, representing a 3-sigma rule in statistics.

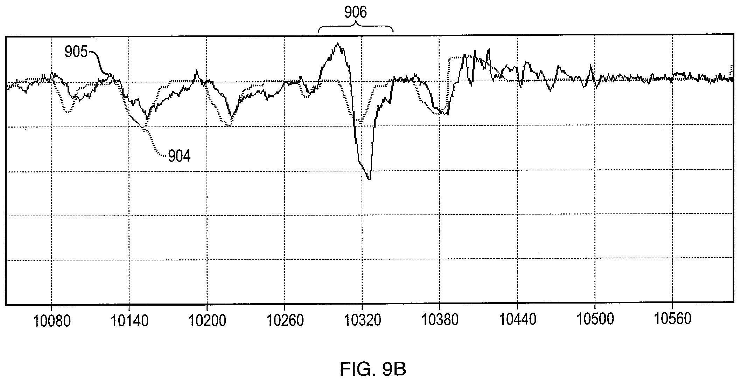

Any data segment detected by the above approach is marked as a "bad data slice" because such data will deteriorate the results of model quality estimation or model re-identification if not excluded. FIG. 9A shows an example of a PV 902 spike detected in data region 903 with associated variable 901. FIG. 9B shows a similar PV 905 spike detected in data region 906 with associated variable 904.

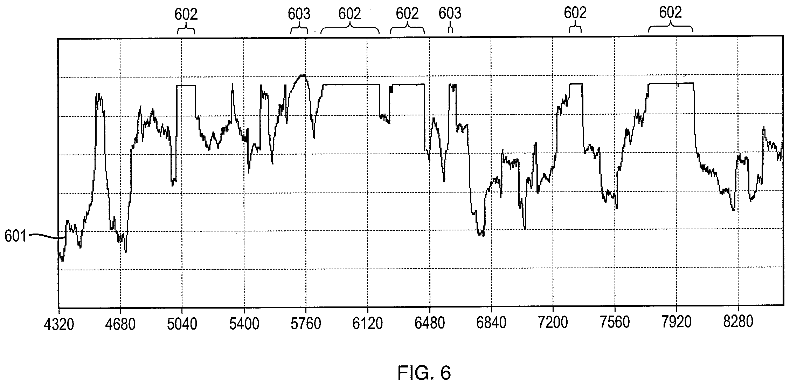

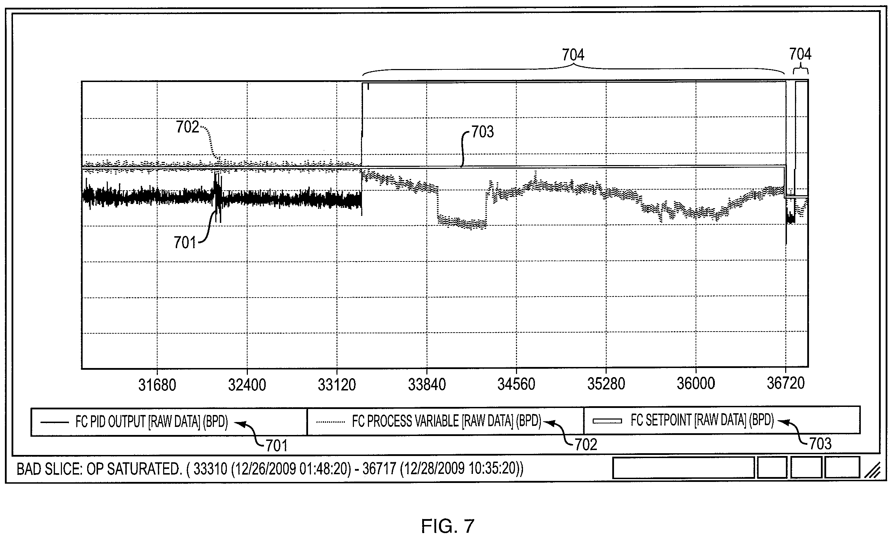

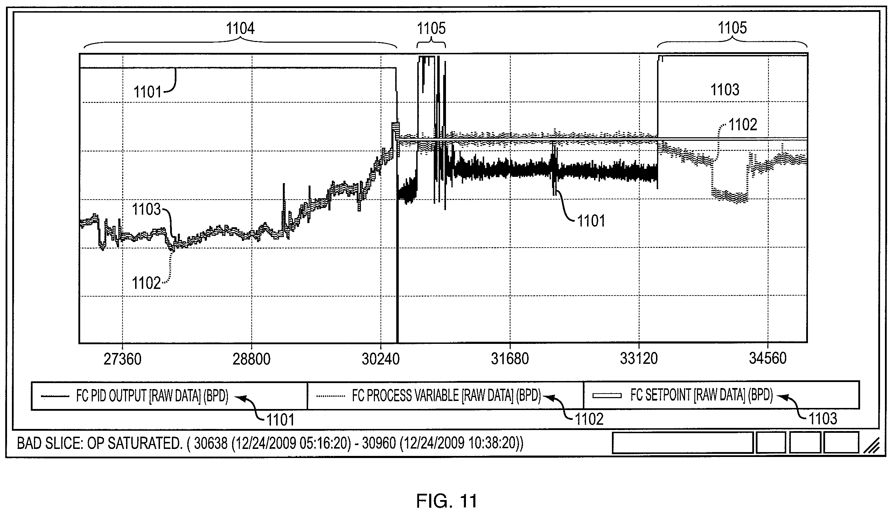

**An OP Saturation and High/Low Limit Detector:** If the given time series is a Dep (dependent variable), then any data segment at its High/Low limits will no longer be able to represent the causal independent-dependent relations correctly. Therefore, a criterion to check is whether a data value is reaching and staying at a limit value. This criterion is applied to generate corresponding Flag values for model quality estimation or model identification purposes as listed in Table 1. FIGS. 6, 7, and 11 illustrate such a situation with High/Low limit values and OP saturations respectively. FIG. 6 shows a data series 601 with detected data regions 602 where the data series 601 is detected as reaching its high value. FIG. 7 shows time series of a process variable 602 with associated setpoint 603 and output 601, where the output is detected as saturated in data region 604. FIG. 11 shows embodiments detecting when a PID loop output is saturated 1105 when a process variable 1102 is no longer able to follow the corresponding set point 1103 (as opposed to data region 1104), such that output 1101 becomes saturated.

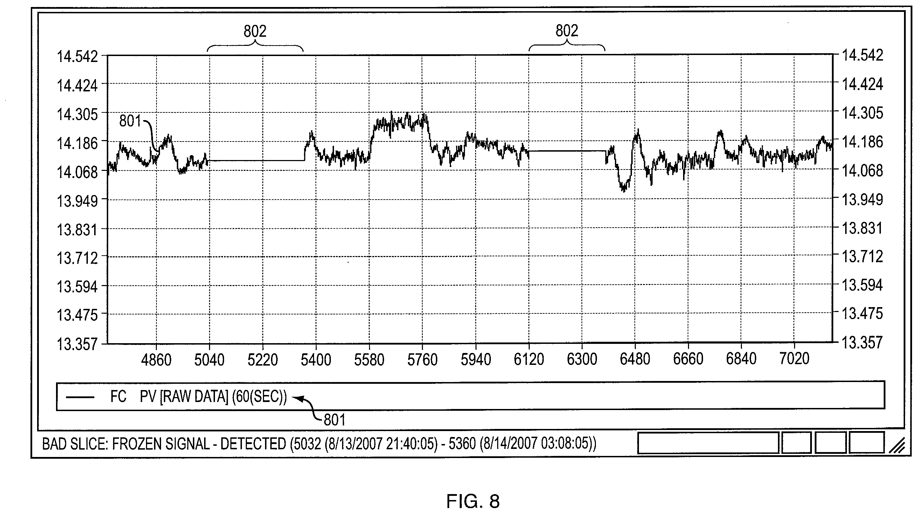

**A Frozen Signal/Measurement Detector:** If the given time series is a Dep (dependent variable), then any data segment with a frozen value will not be able to represent the CV response correctly and should be marked as "bad data" for model identification purposes. FIG. 8 shows an example of a PV signal 801 (measurement) that is frozen for more than one TTSS (Time to steady state) in data regions 802. In one embodiment, TTSS = 60 minutes. The Frozen Signal/Measurement detector detects for such data/signal patterns.

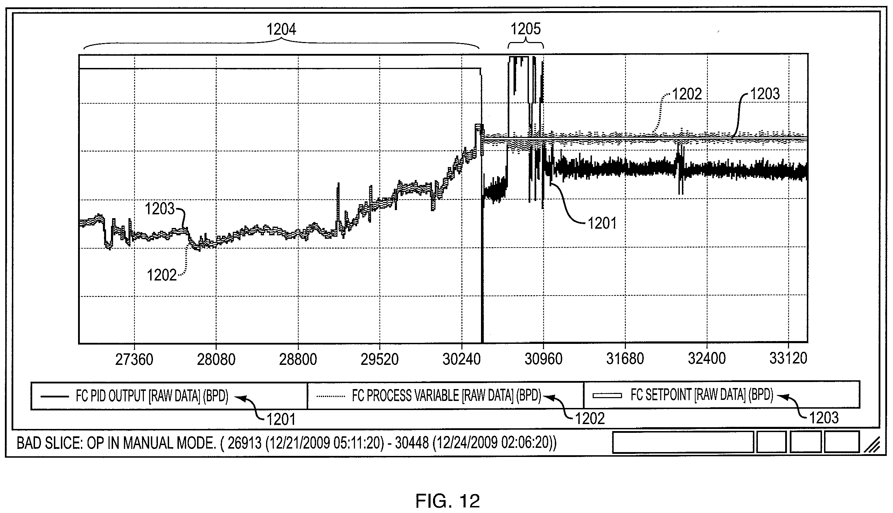

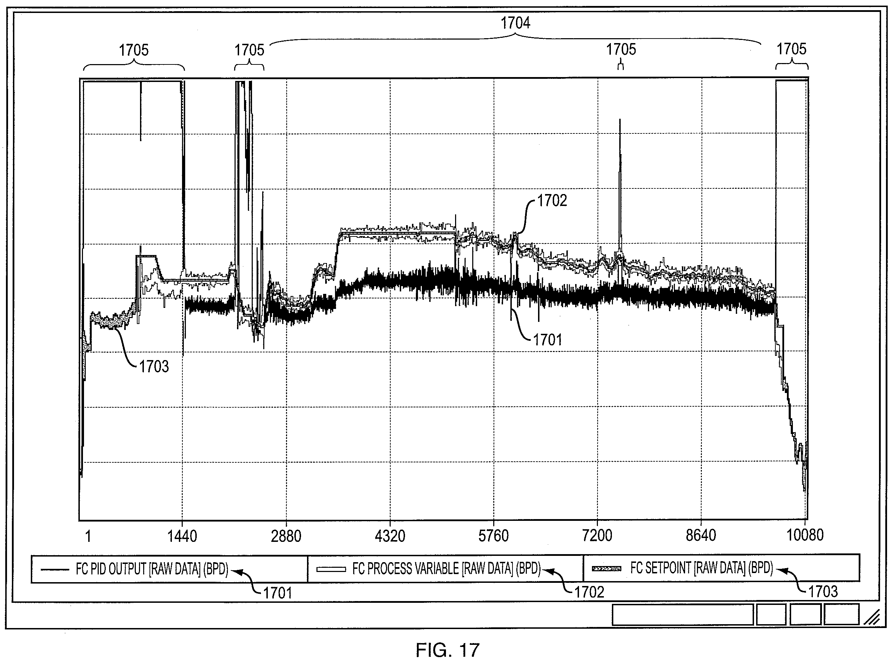

**A PID Manual Mode Detector:** If the given time series is an Ind (independent variable) and it is also a SP (set point) in its PID loop, when the PID loop is in MAN (manual) mode, the SP will track the PV (process variable) while the actual process independent variable (typically a valve opening position or flow rate) is changed by operator through an OP. In such a case, any readings from the SP value cannot represent the true relationship between INDs and DEPs. FIG. 12 illustrates an example of a PID loop in manual mode data range 1204 that was detected automatically by the PID Manual Mode Detector where PV 1202 overlaps setpoint 1203 while output 1201 is constant. As a comparison, FIG. 17 shows a graph from which embodiments determined the subset of data 1704 where PID modes were correctly maintained and no OP (PID output) 1701 saturation 1705 occurred. In the detection region 1704, SP 1703 is tracking PV 1702.

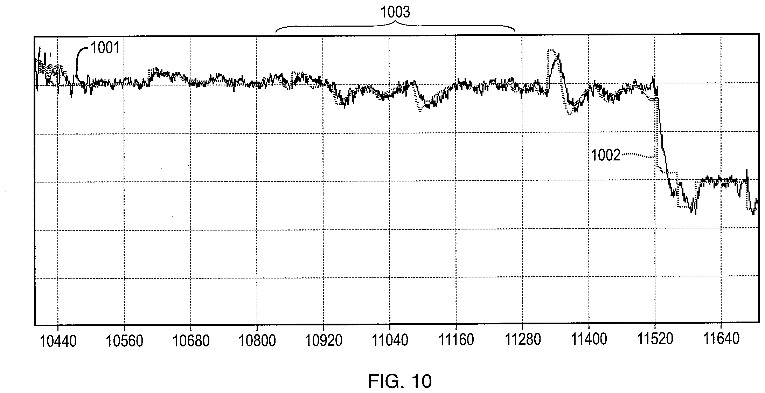

**A SP in Closed-Loop Mode Detector:** If the given time series is an independent variable and it is also a SP (set point) in its PID loop, when the PID loop is in Cascade mode, the SP will follow an external variable such as an OP from the outer PID loop. In such cases, if there is no clean step-moves for a long time, the data segment of the SP will become unsuitable for model identification. FIG. 10 indicates a situation when the SP 1002 was detected in Closed-Loop mode in data region 1003 following variable 1001.

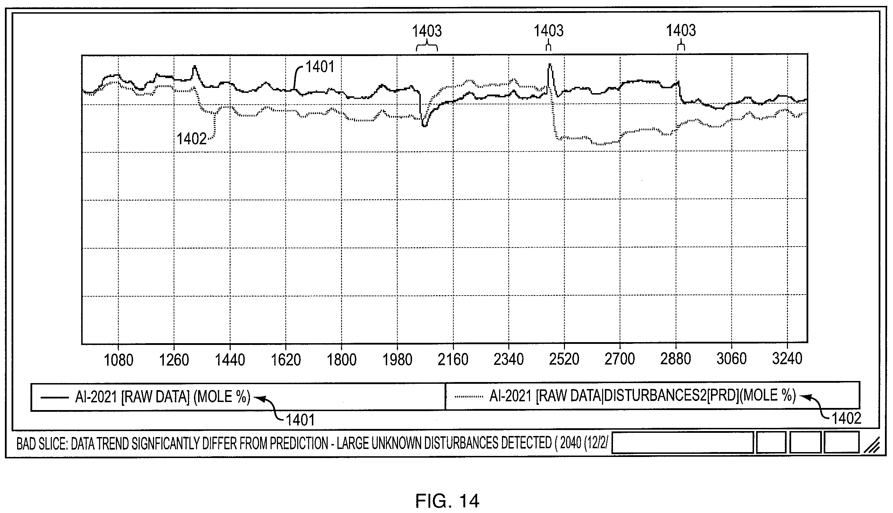

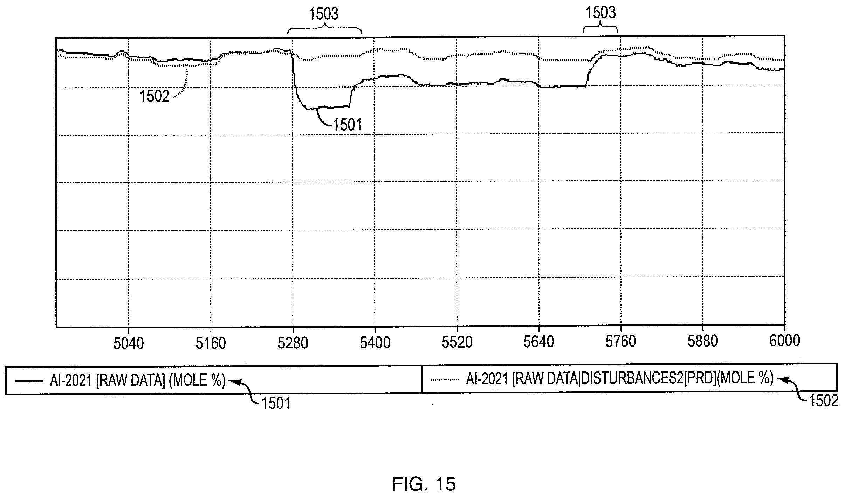

**A Trend Mismatch/Unknown Disturbances Detector:** In addition to all cases and data screen and selection strategies discussed above, there are still cases where a DEP or CV time series may show significant sudden jumps/drops or slowing, but constant ramp ups/downs. In such cases, the DEP or CV is responding to unknown disturbances in the process 120 (*e.g.,* missed FF (feed forward), unknown process disturbances, etc.) and the data segment becomes non-causal and will create negative impacts on model identification if the data is used. FIG. 13 shows detected data ranges 1203 where a PV 1301 is not broadly following SP 1302. FIG. 14 shows examples where the CV measurements 1401 contain several jumps where the model predictions 1402 have no such matched changes and therefore are detected by the detector as a "bad data" slice 1403. Similarly, FIG. 15 shows CV measurements 1501 contain several drops where the model predictions 1502 have no such matched changes and therefore are detected by the detector as a "bad data" slice 1503.

**A Slice Validation Module 270 Using MQ:** To minimize the data loss due to too many bad data sample segments being selected, an innovative approach/module 270 is provided to test and validate all candidate bad data segments before finalizing the bad data slices. The provided approach 270 is formed of the following steps:

**Step 1:** Set all detected bad data slices as "candidate bad data slices", generate good data slices by excluding candidate bad data slices for each time series variable;

**Step 2:** For each DEP (dependent variable), configure a MISO model identification case that takes all INDs as inputs and single DEP as output;

**Step 3:** Apply all good data slices created in Step1 to the configured MISO case in Step 2 for a subspace model identification run;

**Step 4:** Use the dataset created in Step 1 do a Model Quality Assessment on the resulting MISO model from Step 3 and using the techniques described in the parent related application. Record the MQ index value, a KPI (key performance indicator), as a baseline value;

**Step 5:** For each bad data slice among "candidate bad data slices", reset that data segment to a "good" data slice if it is not a data slice found in the basic data screening (*e.g.*, value = -9999, -10001);

**Step 6:** Use the dataset defined in Step 5, run a MISO case identification similar to Step 3 except for that one "candidate bad data slice" that was ignored (removed and treated as good data in Step 5);

**Step 7:** Repeat Step 4, evaluate the identified MISO model in Step 6 by calculating the MQ index value with the same dataset used in Step4, and record the KPI of the new model;

**Step 8:** Compare the KPI value obtained in Step 7 with its baseline value calculated in Step 4; if the new KPI value is sufficiently close to its baseline value, *e.g.,*
|KPI(new) -KPI(baseline)| < ε (where ε is a tunable threshold), then
the negative impact of the selected/tested "candidate" bad data slice is not significant, and therefore the selected bad data slice is de-activated by being removed from the bad data slice list for model identification;

**Step 9:** Move to next "candidate bad data slice" and repeat the validation process from Step 5 through Step 8 above until all candidate bad data slices are assessed and validated.

**A Slice Reparation/Patch Approach/Module 280:** To minimize the data loss due to bad data sample segments, another innovative approach/module 280 is provided to repair and patch short candidate bad data segments before finalizing the bad data slices. One embodiment of the approach is described as follows.

**Step 1:** Select a time series variable $\{x(t)\}$, all candidate bad data slices validated in Slice Validation Module 270 are screened, only those data slices with length less than a half time to steady-state (*i.e.,* all bad data slices satisfying (Length<1/2 TTSS)), are selected for patch/fix;

**Step 2:** If the selected time series is an IND (independent variable), loop through all selected candidate bad data slices in Step1 and do the following data patch:

*(1)* Assume the start index = *Start,* and the number of samples in slice = *Length,* then the slice ending sample index *End= (Start+Length-1);*

*(2)* Check the good sample values next to the two ends of the bad data slice to see if they satisfying $|x(t=Start-1)-x(t=End+1)|<\varepsilon$, where ε is a tunable threshold;

*(3)* If the condition in (2) is satisfied, create an "interpolation slice" with the following values generated by linear interpolation:

$$k = \frac{x(t = End + 1) - x(t = Start - 1)}{(End - Start + 2)}$$

$\{\hat{x}(t) = x_0 + k[x(t) - x_0(t)]\}$ where $x_0 = x(t = Satrt - 1)$, $t = Start,..., End$;

*(4)* Replace the values of $\{x(t)\}$ with interpolated values generated in (3) for the selected bad data slice.

**Step 3:** If the selected time series is a DEP (dependent variable), configure a MISO case with this DEP and all INDs, apply all candidate bad data slices and run a model identification; use the identified MISO model and its input dataset generating model predictions on this DEP;

**Step 4:** Loop through all selected candidate bad data slices in Step 1 (of Module 280) for the DEP, if the model predictive values generated in Step 3 (of Module 280) are available (predictive values may not always be available, *e.g.,* due to model re-initialization after a bad data slice) for a candidate bad data slice, then an "interpolated slice" is created with the following equation:

$\{\hat{x}(t) = x_{pred}(t)\}$ where $t = (Start - TTSS),...,(End + TTSS)$;

It is worthy to note that each of above interpolated slices consists of (2xTTSS) more samples than the corresponding bad data slice for a good connection (see below for details).

**Step 5:** A special algorithm (described below) calculates two connection points for a flexible data slice patch which ensures the smoothness of the patch and minimizes the data loss;

**Step 6:** Move to next candidate data slice and repeat the process 280 Steps 3 through 5 as above.

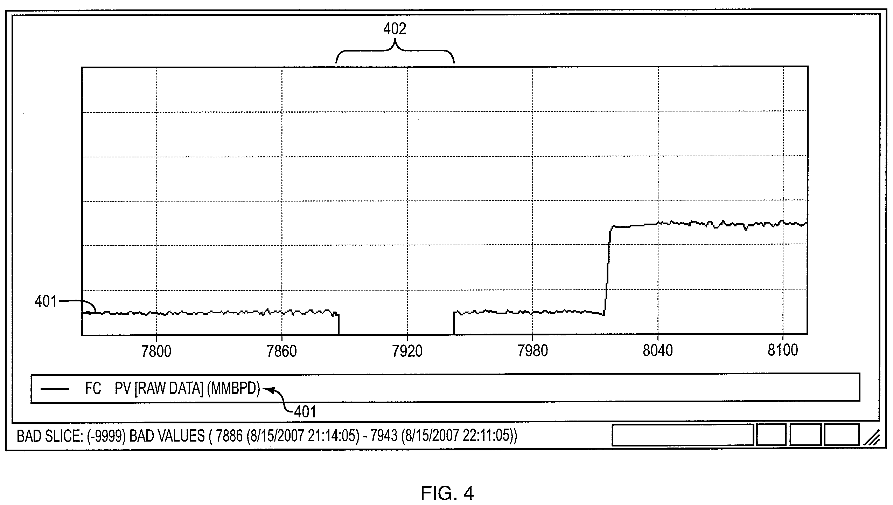

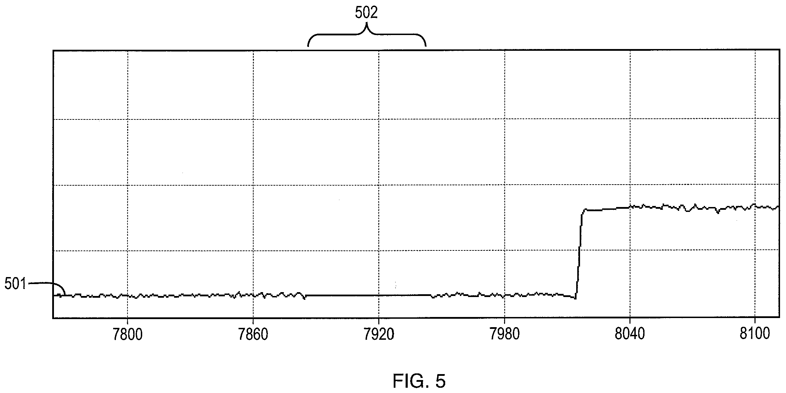

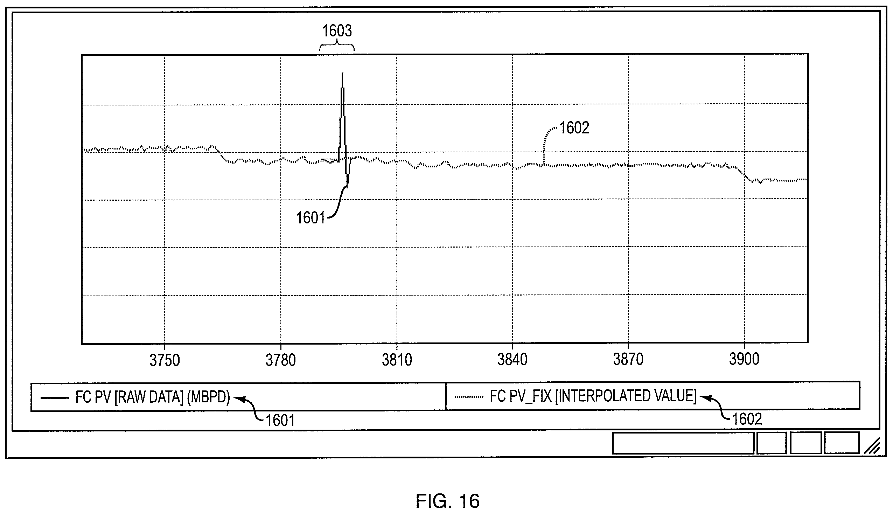

**An Algorithm for Slice Interpolation Connection:** To minimize the negative impacts of replaced bad data slices by interpolated data samples, a special algorithm is provided for a smooth connection between the two end points of a short bad data slice. FIG. 4 shows a time series of a process variable 401 and an associated segment of bad data 402. FIG. 5 shows the result of patching the same data segment of the process variable 501 with interpolated data segments in data range 502. FIG. 16 shows a PV time series 1601 with detected bad CV data 1603 and replaced bad data segments with predicted data 1602 without causing discontinuities in the repaired CV sequence. The algorithm is comprised of the following steps:

**Step 1:** Read the user specified start point (*UI_Start*) and end point (*UI_End*) for a data slice patch from UI (default values *UI_Start= Start, UI_End=End,* are calculated for the data slice shown in Figs. 5 and 16.)

**Step 2:** *UI_Start* and *UI_End* points by examining the following:

If *UI_Start* ⊆ (*Start - TTSS, End*), *UI_Start* is Valid;
If *UI_End* ⊆ (*Start, End + TTSS*), *UI_End* is Valid.
If both *UI_Start* and *UI_End* are valid, then move to Step 3;

**Step 3:** Calculate the Two Connection points:

For smooth connection, two average values around the connecting points *UI_Start* and *UI_End* are used instead of two single measurement points. In the case of the underlying time series being noisy, the calculation below is particularly important and helpful to patching the bad data slice:

$$\overline{x}_{Start} = \sum_{t=t_0}^{t_0+n} x(t)$$

where $t_0 = UI\_Start - n$ and $n = 10$;

$$\overline{x}_{End} = \sum_{t=t_f}^{t_f+n} x(t)$$

where $t_f = UI\_End - n$

**Step 4:** Calculate interpolated values:

To best patch a selected bad data slice, a set of model predictive values rather than a straight line (often used in the prior art), are filled into the data slice to replace the original undesirable values. Considering the possible bias between the model predictive values and the original measurements, and a possible data/prediction drafting during the time period over the slice, the following calculation with position adjustments is provided:

$$\Delta_{offset}(t) = \Delta_{offset}(t_0) \times \left( \Delta_{offset}(t_f) - \Delta_{offset}(t_0) \right) \times (t - t_0)/(t_f - t_0);$$

$$\hat{x}(t) = \Delta_{offset}(t) + x_{PRED}(t);$$

with $\Delta_{offset}(t_0) = \overline{x}_{Start} - x_{PRED}(t_0)$,
and $\Delta_{offset}(t_f) = \overline{x}_{End} - x_{PRED}(t_f)$

### A Graphical User Interface (GUI) and Algorithms to Allow Users Adding, Deleting and Modifying Slices

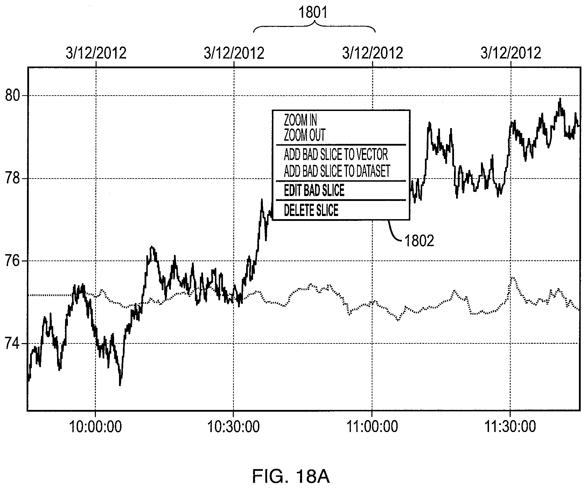

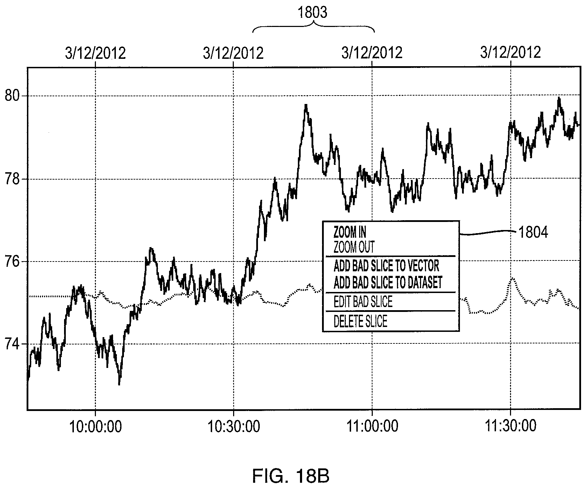

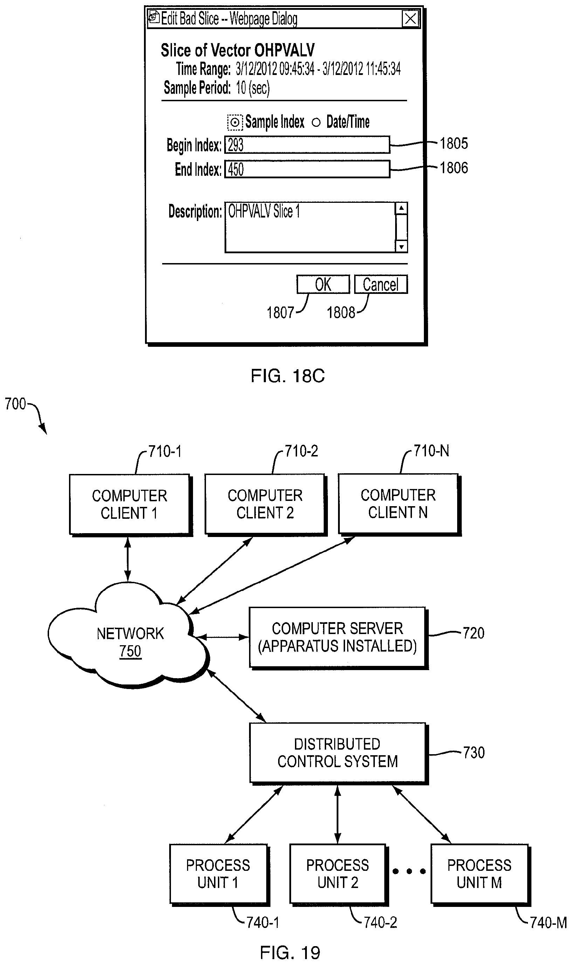

Automated data selection apparatus and methods can help engineers prepare process data effectively, but it is still necessary and important to allow users to view, add, delete or edit the auto-generated bad data slices. A GUI (graphical user interface) or Web page and supporting algorithm (software) are provided in some embodiments to provide such functions. Figs. 18A, 18B, and 18C illustrate the GUI. In FIG.18A, the GUI 1802 allows a user to mark a data range 1081 by mouse clicks and add as a bad data slice to either a vector or a dataset (all vectors). FIG.18B shows a GUI element 1804 (e.g., pop up menu) that enables the user to delete an existing bad data slice 1803 or edit it by opening a new dialog shown in FIG. 18C. FIG.18C illustrates an example dialog box enabling editing of a data slice. Here the user is allowed to edit the bad data slice by re-typing Begin 1805 and End 1806 indexes (alternatively, Date and Time). Then the user confirms the changes by clicking on the OK button 1807, or, alternatively, cancels the changes by clicking on the Cancel button 1808. Other selection and confirmation configurations are suitable.

FIG. 19 illustrates a computer network and client-server environment in which embodiments of the present invention may be implemented. Client computer(s)/devices 710 and server computer(s) 720 provide processing, storage, and input/output devices executing application programs and the like. Typically, the present invention is installed as an apparatus in server computer 720. The server computer 720 and client computer(s)/devices 710 can be linked through communications network 750 to other computing devices, including other client devices/processes 710-1 and Distributed Control System (DCS) 730. Communications network 750 can be part of a remote access network, a global network (e.g., the Internet), a worldwide collection of computers, Local area or Wide area networks, and gateways that currently use respective protocols (TCP/IP, Bluetooth, etc.) to communicate with one another. Other electronic device/computer network architectures are suitable.

An example of implementation of the present invention may be as shown in FIG. 19 where the DCS system 730 controls one or more process units 740. An apparatus and method (e.g., process/modules 110, 140, 102, 200 and 300) described above is installed to run in the server computer 720. A user may access the server application from one or more client computers 710 that allow a remote connection through security and firewall in the network 750. A user may view, manage, change operations of one or more process units 740 through the DCS system 730. The described application may be configured by user from one or more client computers (710) and run in the server computer 720.

The present invention may be implemented in a variety of computer architectures. The computer network system 700 of FIG. 19 is for purposes of illustration and not limitation of the present invention.

Server computer 720 includes memory, a CPU (central processing unit) and the like. Memory provides volatile storage for computer software instructions and data used to implement an embodiment of the present invention (e.g., the controller 110, data screening and model identification 140, model adaptation, and supports processes 200, 300, GUI of FIG. 18, etc. as described above). Disk storage provides non-volatile storage for computer software instructions and data used to implement an embodiment of the present invention. The central processor unit provides for the execution of computer instructions. In one embodiment, the processor routines and data are a computer program product, including a computer readable medium (e.g., a removable storage medium such as one or more DVD-ROM's, CD-ROM's, diskettes, tapes, etc.) that provides at least a portion of the software instructions for the invention system. The computer program product can be installed by any suitable software installation procedure, as is well known in the art. In another embodiment, at least a portion of the invention software instructions may also be downloaded over a cable, communication, and/or wireless connection or operable through a network portal.

While this invention has been particularly shown and described with references to example embodiments thereof, it will be understood by those skilled in the art that various changes in form and details may be made therein without departing from the scope of the invention encompassed by the appended claims.

## Claims

1. A method of screening and selecting data automatically for model identification and model adaptation in a multivariable predictive controller (MPC) (200), the method comprising:
   given an online controller having an existing model, in a processor:

   loading process data (210) from a subject process and storing said process data in a database accessible by said model;
   **characterized by**;
   using a rule-based data selector, automatically detecting and excluding data segments of the stored process data that are unsuitable for model quality estimation and for model identification;
   validating (270) the excluded data segments to minimize the data loss from bad data segments being excluded;
   repairing certain data segments of said stored process data to maximize usage of data in a MPC application; and
   updating said existing model using resulting process data as stored in the database, wherein said rule-based selector is configured to,
   screen a given time series variable (230) as a dependent process variable or an independent process variable and apply a basic data screening filter to detect and mark data segments of the time series as good data or bad data according to given data quality measurement parameters;
   group time series variables according to their associated proportional-integral-derivative PID loop;
   compare process variables PV (250) against their corresponding set points SP in each PID loop and applying data screening filters;
   generate predictions (260) for dependent variables without a PID association using available independent variable measurements;
   evaluate said generated predictions for dependent variables without a PID association against corresponding available dependent variable measurements and applying data screening methods; and
   identify and generate bad data slices in the given time series variable using the data segments marked as bad data and a data slice generator to exclude said bad data segments from the time series.

2. The method of Claim 1, wherein using a rule-based data selector for detecting and excluding data segments of stored process data that are unsuitable for model quality estimation and for model identification comprises the steps of:

   a. collecting process data variables and storing collected process data variables in said database at a given sampling frequency as time series variables;
   b. loading data status, special values, and value limits of variables of the subject process with their corresponding time series from the database.

3. The method of Claim 2, wherein process data variables includes at least one of manipulated variables (MVs), measurements of control variables (CVs) of the subject process, calculated values of independent variables, calculated values of dependent variables, all data vectors of the subject process, and all PID controller loops.

4. The method of Claim 1, wherein the basic data screening include at least one of a PID controller output (OP) saturation and High/Low limit detector, a frozen signal/measurement detector if the given time series is a dependent variable, and a PID manual mode detector if the given time series is an independent variable.

5. The method of Claim 1, wherein the comparing process variables (PV) against their corresponding set points (SP) in each PID loop and applying data screening filters comprises:

> performing a PID loop association search and finding available SP, PV, and OP among all process variables, determining whether a PV and SP pair or a PV, SP and control output (OP) triple are associated with the time series in a PID loop, and
> if PV and SP pair or PV, SP and OP triple is associated with the time series in the same PID loop, using a rule-based data selector to apply data screening filters to detect data sequences showing deviations from their SP and marking the corresponding segments of data as bad data.

6. The method of Claim 2, wherein the evaluating said generated predictions for dependent variables without a PID association against their measurements and applying data screening filters comprises:
if no PV and SP pair or PV, SP and OP triple is associated with the current time series variable in the same PID loop and the time series variable is a dependent process variable, using data screening filters to detect data segments showing spikes and deviations in moving trend and marking the corresponding segments of data as bad data according to given data screening filters.

7. The method of Claim 5 or Claim 6, wherein the data screening filters include at least one of a PV spike detector, if the given time series is a dependent variable, a PID manual mode detector, a SP in closed-loop mode detector if the given time series is an independent variable, and a trend mismatch/unknown disturbances detector.

8. The method of Claim 7, wherein a trend mismatch/unknown disturbances detector comprises:

> generating a model prediction of the time series variable via a multiple-input single-output (MISO) model;
> calculating a prediction error for unknown disturbances;
> detecting if a control variable (CV) time series does not parallel the predicted MISO model values;
> detecting if a large sustained shift in the average value of the CV has occurred outside of the normal movement and determining if it is associated with the model prediction; and
> selecting for exclusion the data segments of the time series variable showing difference in trends beyond the prediction error and making selected data segments as bad data.

9. The method of Claim 1, wherein validating the excluded data segments to minimize the data loss from bad data segments being excluded comprises:

> testing bad data segments of said time series not removed by a basic data filter by comparing the model qualities (MQ) when said bad data segments are included and excluded in the model identification; and
> confirming bad data segments as bad data based on the MQ comparison, otherwise unmarking candidate bad data segments.

10. The method of Claim 9 wherein testing bad data slices comprises:

> setting bad data segments as Candidate bad data segments and generating good data segments by excluding Candidate bad data segments for each time series variable;
> for a dependent variable, configuring a multiple-input single-output (MISO) model identification and loading the independent variables as inputs and the dependent variable as output in said MISO model;
> applying said generated good data segments to the configured MISO model and calculating a baseline model quality index (MQ) by performing a model quality assessment on said MISO model; and
> running a MISO case identification on a Candidate bad data segment of said data segments not removed by a basic data filter and calculating a candidate MQ by performing a model quality assessment on said MISO model corresponding to the Candidate bad data segment.

11. The method of Claim 10 wherein confirming Candidate bad data segments as bad data comprises:
given a tunable parameter as a threshold, marking Candidate bad data segment as a good data segment if difference between baseline MQ and candidate MQ is within said tunable threshold and removing corresponding data slices from a list of bad data slices.

12. The method of Claim 9, wherein repairing certain data segments of said stored process data to maximize usage of data in a MPC application comprises:

for the given time series variable, selecting all confirmed bad data segments with length less than a half time to steady-state (TTSS) for interpolation;
patching segments in the time series where data portions have been removed by the data slice generator with interpolated data segments; and
minimizing the negative impacts of replacing bad data segments with interpolated data segments by patching bad data slices with their interpolated slices with a smooth connection between the end points of a interpolated data segments.

13. The method of Claim 12, wherein patching segments comprises:

if the time series variable is an independent variable, checking the good data segments adjacent to the selected bad data segments to determine if the good data sample values before a Start Point and after a End Point of a bad data segment are within a given threshold, and, if true, creating an interpolation slice by linear interpolation and replacing the selected bad data segments with the interpolation slice;
if the selected time series variable is a dependent variable, configuring a MISO model case with the dependent variable and associated independent variables, and running a MISO identification case using the resultant MISO model to generate a model prediction on the dependent variable, and creating an interpolated slice for bad data segments if model predictive values are available for the bad data segment; and
if the time series variable is a dependent variable, checking the good data segments adjacent to the selected bad data segments to determine if the calculated average values over a given length before the Start Point and after the End Point of a bad data segment are within the given threshold, and if true, creating an interpolation slice by linear interpolation and replacing the selected bad data segments with the interpolation slice, the interpolation slice smoothly connected to the good data segments.

14. An apparatus for screening and selecting data automatically for model identification and model adaptation in a multivariable predictive controller (MPC) (200), the apparatus comprising:

a MPC coupled to a process system and having an existing model;
a computer processor executing routines in a working memory, the computer processor coupled to the multivariable controller;
a routine that accesses process data from a subject process and stores said process data in a database accessible by said model;
**characterized by**;
a routine that automatically detects and excludes data segments of process data that are unsuitable for model quality estimation and for model identification;
a routine that validates (270) excluded data segments to minimize the data loss from bad data segments being excluded; and
a routine that repairs certain data segments of process data to maximize usage of data in a MPC application; and
a routine that, given a time series variable, determines the time series variable as a dependent process variable or an independent process variable and applies basic data screening filters to detect and mark data segments of the time series as good data or bad data according to given data quality parameters;
a routine that groups time series variables according to their associated proportional-integral-derivative (PID) loops;
a routine that compares process variables (PV) (250) against their corresponding set points (SP) in each PID loop and applies data screening filters, the data screening filters including at least one of: a controller output (OP) saturation and High/Low limit detector, a frozen signal/measurement detector if the given time series is a dependent variable, and a PID manual mode detector if the given time series is an independent variable;
a routine that generates predictions (260) for dependent variables without a PID association using available independent variable measurements;
a routine that evaluates said generated predictions for dependent variables without a PID association against corresponding available dependent variable measurements and applies data screening methods; and
a routine that generates bad data slices in the given time series variable using the data segments marked as bad data and a data slice generator to exclude said bad data segments from the time series.

15. The apparatus of Claim 14, wherein the routine that detects and excludes data segments of process data that are unsuitable for model quality estimation and for model identification comprises:

a routine that collects process data variables and storing collected process data variables in said database at a given sampling frequency as time series variables, the process data variables including at least one of: manipulated variables (MVs), measurements of control variables (CVs) of the subject process, calculated values of independent variables, calculated values of and dependent variables, all data vectors of the subject process, and all PID controller loops;
a routine that loads data status, special values, and value limits of variables of the subject process with their corresponding time series from the database.


**Patentansprüche**

1. Verfahren zum automatischen Screenen und Auswählen von Daten zur Modellidentifikation und Modellanpassung in einer multivariablen prädiktiven Steuerung (MPC) (200), wobei das Verfahren aufweist:

bei einem Online-Controller mit einem bestehenden Modell, in einem Prozessor: Laden (210) von Prozessdaten aus einem Subjektprozess und Speichern der Prozessdaten in einer vom Modell zugänglichen Datenbank, **gekennzeichnet durch**
unter Verwendung eines regelbasierten Datenselektors, automatisches Erfassen und Ausschließen von Datensegmenten der gespeicherten Prozessdaten, die zur Modellqualitätsschätzung und zur Modellidentifikation ungeeignet sind;
Validieren (270) der ausgeschlossenen Datensegmente, um den Datenverlust aus schlechten Datensegmenten, die ausgeschlossen sind, zu minimieren;
Reparieren bestimmter Datensegmente der gespeicherten Prozessdaten, um die Nutzung von Daten in einer MPC-Anwendung zu maximieren; und
Aktualisieren des bestehenden Modells unter Verwendung von resultierenden Prozessdaten, wie sie in der Datenbank gespeichert sind,
wobei der regelbasierte Selektor konfiguriert ist, um

eine gegebene Zeitreihenvariable als eine abhängige Prozessvariable oder eine unabhängige Prozessvariable zu screenen und einen Basisdaten-Screening-Filter anzuwenden, um Datensegmente der Zeitreihe in Abhängigkeit von gegebenen Datenqualitäts-Messparametern als gute Daten oder schlechte Daten zu erfassen und zu markieren;
Zeitreihen-Variablen gemäß ihrer zugehörigen proportional-integral-derivativen (PID) - Schleife zu gruppieren;
Prozessvariablen PV in jeder PID-Schleife mit ihren entsprechenden Sollwerten SP zu vergleichen (250) und Daten-Screening-Filter anzuwenden; Vorhersagen für abhängige Variablen ohne eine PID-Zuordnung unter Verwendung von verfügbaren Messungen unabhängiger Variablen zu erzeugen (260);
die erzeugten Vorhersagen für abhängige Variablen ohne eine PID-Zuordnung gegenüber entsprechenden verfügbaren Messungen abhängiger Variablen zu bewerten und Daten-Screening-Verfahren anzuwenden; und
schlechte Datenscheiben in der gegebenen Zeitreihenvariable unter Verwendung der als schlechte Daten markierten Datensegmente und eines Datenscheibengenerators zu identifizieren und zu erzeugen, um die schlechten Datensegmente aus der Zeitreihe auszuschließen.

2. Verfahren nach Anspruch 1, bei welchem das Verwenden eines regelbasierten Datenselektors zum Erfassen und Ausschließen von Datensegmenten gespeicherter Prozessdaten, die zur Modellqualitätsschätzung und zur Modellidentifikation ungeeignet sind, die Schritte aufweist:

a. Sammeln von Prozessdatenvariablen und Speichern von gesammelten Prozessdatenvariablen in der Datenbank mit einer gegebenen Abtastfrequenz als Zeitreihenvariablen;
b. Laden von Datenstatus, speziellen Werten und Wertegrenzen von Variablen des Subjektprozesses mit ihrer entsprechenden Zeitreihe aus der Datenbank.

3. Verfahren nach Anspruch 2, bei welchem die Prozessdatenvariablen wenigstens eines enthalten von manipulierten Variablen (MVs), Messungen von Steuervariablen (CVs) des Subjektprozesses, berechneten Werten unabhängiger Variablen, berechneten Werten abhängiger Variablen, allen Datenvektoren des Subjektprozesses und allen PID-Controller-Schleifen.

4. Verfahren nach Anspruch 1, bei welchem das Basisdaten-Screening wenigstens eines enthält von einer PID-Controller - Ausgangs (OP) - Sättigung und einem High/Low-Grenzwertdetektor, einem Detektor für gefrorene(s) Signal/Messung, falls die gegebene Zeitreihe eine abhängige Variable ist, und einem PID-Handmodusdetektor, falls die gegebene Zeitreihe eine unabhängige Variable ist.

5. Verfahren nach Anspruch 1, bei welchem das Vergleichen der Prozessvariablen (PV) mit ihren entsprechenden Sollwerten (SP) in jeder PID-Schleife und das Anwenden der Daten-Screening-Filter aufweist:

Durchführen einer PID-Schleifen-Assoziationssuche und Finden von verfügbaren SP, PV und OP unter allen Prozessvariablen, Bestimmen, ob ein PV- und SP-Paar oder ein PV-, SP- und Controllerausgangs- (OP) Tripel mit der Zeitreihe in einer PID-Schleife verbunden sind, und
falls das PV- und SP-Paar oder das PV-, SP- und OP-Triple mit der Zeitreihe in derselben PID-Schleife verbunden ist, Verwenden eines regelbasierten Datenselektors, um Daten-Screening-Filter anzuwenden, um Datensequenzen zu erfassen, die Abweichungen von ihrem SP zeigen, und Markieren der entsprechenden Datensegmente als schlechte Daten.

6. Verfahren nach Anspruch 2, bei welchem das Bewerten der erzeugten Vorhersagen für abhängige Variablen ohne eine PID-Assoziation gegenüber ihren Messungen und Anwenden von Daten-Screening-Filtern aufweist:

falls kein PV- und SP-Paar oder PV-, SP- und OP-Tripel mit der aktuellen Zeitreihenvariablen in derselben PID-Schleife verbunden ist und die Zeitreihenvariable eine abhängige Prozessvariable ist, Verwenden von Daten-Screening-Filtern, um Datensegmente zu erfassen, die Spitzen und
Abweichungen im Bewegungstrend zeigen, und Markieren der entsprechenden Datensegmente gemäß gegebenen Daten-Screening-Filtern als schlechte Daten.

7. Verfahren nach Anspruch 5 oder Anspruch 6, bei welchem die Daten-Screening-Filter wenigstens eines enthalten von einem PV-Spike-Detektor, falls die gegebene Zeitreihe eine abhängige Variable ist, einem PID-Handmodusdetektor, einem Detektor für SP im Closed-Loop-Modus, falls die gegebene Zeitreihe eine unabhängige Variable ist, und einem Detektor für Trendfehlanpassung / unbekannte Störungen.

8. Verfahren nach Anspruch 7, bei welchem ein Detektor für Trendfehlanpassung / unbekannte Störungen aufweist:

Erzeugen einer Modellvorhersage der Zeitreihenvariable über ein Mehrfacheingangs-Einzelausgangs (MISO) - Modell;
Berechnen eines Vorhersagefehlers für unbekannte Störungen;
Erfassen, ob eine Steuervariablen (CV) - Zeitreihe nicht den vorhergesagten MISO-Modellwerten entspricht;
Erfassen, ob eine große anhaltende Verschiebung des Mittelwerts des CV außerhalb der normalen Bewegung aufgetreten ist, und Bestimmen, ob sie mit der Modellvorhersage verbunden ist; und
Auswählen der Datensegmente der Zeitreihenvariable zum Ausschluss, die einen Unterschied in Trends jenseits des Vorhersagefehlers zeigen, und Machen der ausgewählten Datensegmente zu schlechten Daten.

9. Verfahren nach Anspruch 1, bei welchem das Validieren der ausgeschlossenen Datensegmente, um den Datenverlust durch schlechte Datensegmente, die ausgeschlossen sind, zu minimieren, aufweist:

Testen von schlechten Datensegmenten der Zeitreihe, die nicht durch einen Basisdatenfilter entfernt wurden, durch Vergleichen der Modellqualitäten (MQ), wenn die schlechten Datensegmente in der Modellidentifikation enthalten und ausgeschlossen sind; und
Bestätigen von schlechten Datensegmenten als schlechte Daten basierend auf dem MQ-Vergleich, andernfalls Aufheben der Markierung von Kandidaten schlechter Datensegmente.

10. Verfahren nach Anspruch 9, bei welchem das Testen schlechter Datenscheiben aufweist:

Festlegen von schlechten Datensegmenten als Kandidat schlechter Datensegmente und Erzeugen von guten Datensegmenten durch Ausschließen von Kandidaten schlechter Datensegmente für jede Zeitreihenvariable; für eine abhängige Variable, Konfigurieren einer Mehrfacheingangs-Einzelausgangs (MISO) - Modellidentifikation und Laden der unabhängigen Variablen als Eingaben und der abhängigen Variablen als Ausgabe in dem MISO-Modell;

Anwenden der erzeugten guten Datensegmente auf das konfigurierte MISO-Modell und Berechnen eines Basismodell-Qualitätsindex (MQ) durch Durchführen einer Modellqualitätsbewertung auf dem MISO-Modell; und Ausführen einer MISO-Fallidentifikation an einem Kandidaten eines schlechten Datensegments der Datensegmente, der nicht durch einen Basisdatenfilter entfernt wurde, und Berechnen eines Kandidaten-MQ durch Durchführen einer Modellqualitätsbewertung auf dem MISO-Modell, das dem Kandidaten des schlechten Datensegments entspricht.

11. Verfahren nach Anspruch 10, bei welchem das Bestätigen von Kandidaten schlechter Datensegmente als schlechte Daten aufweist:

bei einem abstimmbaren Parameter als Schwellenwert, Markieren eines Kandidaten eines schlechten Datensegments als ein gutes Datensegment, falls eine Differenz zwischen Basislinien-MQ und Kandidaten-MQ innerhalb des abstimmbaren Schwellenwerts liegt, und Entfernen entsprechender Datenscheiben aus einer Liste schlechter Datenscheiben.

12. Verfahren nach Anspruch 9, bei welchem das Reparieren bestimmter Datensegmente der gespeicherten Prozessdaten, um die Datennutzung in einer MPC-Anwendung zu maximieren, aufweist:

für die gegebene Zeitreihenvariable, Auswählen aller bestätigten schlechten Datensegmente mit einer Länge weniger als eine halbe Zeit bis zum stationären Zustand (TTSS) zur Interpolation; Patchen von Segmenten in der Zeitreihe, in der Datenteile vom Datenscheibengenerator mit interpolierten Datensegmenten entfernt worden sind; und Minimieren der negativen Auswirkungen des Ersetzens von schlechten Datensegmenten durch interpolierte Datensegmente durch Patchen von schlechten Datenscheiben mit ihren interpolierten Scheiben mit einer glatten Verbindung zwischen den Endpunkten eines interpolierten Datensegments.

13. Verfahren nach Anspruch 12, bei welchem das Patchen der Segmente aufweist:

falls die Zeitreihenvariable eine unabhängige Variable ist, Überprüfen der guten Datensegmente neben den ausgewählten schlechten Datensegmenten, um zu bestimmen, ob die Abtastwerte guter Daten vor einem Startpunkt und nach einem Endpunkt eines schlechten Datensegments innerhalb eines gegebenen Schwellenwerts liegen, und, falls zutreffend, Erzeugen einer Interpolationsscheibe durch lineare Interpolation und Erzeugen der ausgewählten schlechten Datensegmente durch die Interpolationsscheibe; falls die ausgewählte Zeitreihenvariable eine abhängige Variable ist, Konfigurieren eines MISO-Modellfall mit der abhängigen Variablen und den zugehörigen unabhängigen Variablen und Ausführen eines MISO-Identifikationsfalls unter Verwendung des resultierenden MISO-Modells, um eine Modellvorhersage auf der abhängigen Variablen zu erzeugen, und Erzeugen einer interpolierten Scheibe für schlechte Datensegmente, falls Modellvorhersagewerte für das schlechte Datensegment verfügbar sind; und falls die Zeitreihenvariable eine abhängige Variable ist, Prüfen der guten Datensegmente neben den ausgewählten schlechten Datensegmenten, um zu bestimmen, ob die berechneten Mittelwerte über eine gegebene Länge vor dem Startpunkt und nach dem Endpunkt eines schlechten Datensegments innerhalb des gegebenen Schwellenwerts liegen, und, falls zutreffend, Erzeugen einer Interpolationsscheibe durch lineare Interpolation und Ersetzen der ausgewählten schlechten Datensegmente durch die Interpolationsscheibe, wobei die Interpolationsscheibe glatt mit den guten Datensegmenten verbunden ist.

14. Vorrichtung zum automatischen Screenen und Auswählen von Daten zur Modellidentifikation und Modellanpassung in einer multivariablen prädiktiven Steuerung (MPC) (200), wobei die Vorrichtung aufweist:

eine MPC, die mit einem Prozesssystem gekoppelt ist und ein bestehendes Modell hat; einen Computerprozessor, der Routinen in einem Arbeitsspeicher ausführt, wobei der Computerprozessor mit der multivariablen Steuerung gekoppelt ist; eine Routine, die auf Prozessdaten aus einem Subjektprozess zugreift und die Prozessdaten in einer vom Modell zugänglichen Datenbank speichert, **gekennzeichnet durch** eine Routine, die Datensegmente der Prozessdaten, die zur Modellqualitätsschätzung und zur Modellidentifikation ungeeignet sind, automatisch erfasst und ausschließt;

eine Routine, die ausgeschlossene Datensegmente validiert (270), um den Datenverlust aus schlechten Datensegmenten, die ausgeschlossen sind, zu minimieren;

eine Routine, die bestimmte Datensegmente der Prozessdaten repariert, um die Datennutzung in einer MPC-Anwendung zu maximieren; und

eine Routine, die bei einer Zeitreihenvariable die Zeitreihenvariable als eine abhängige Prozessvariable oder eine unabhängige Prozessvariable bestimmt und Basisdaten-Screening-Filter anwendet, um Datensegmente der Zeitreihe in Abhängigkeit von gegebenen Datenqualitäts-Messparametern als gute Daten oder schlechte Daten zu erfassen und zu markieren;

eine Routine, die Zeitreihen-Variablen gemäß ihren zugehörigen proportional-integral-derivativen (PID) - Schleifen gruppiert;

eine Routine, die Prozessvariablen (PV) in jeder PID-Schleife mit ihren entsprechenden Sollwerten (SP) vergleicht (250) und Daten-Screening-Filter anwendet, wobei die Daten-Screening-Filter wenigstens eines enthalten von einer Controller - Ausgangs (OP) - Sättigung und einem High/Low-Grenzwertdetektor, einem Detektor für gefrorene(s) Signal/Messung, falls die gegebene Zeitreihe eine abhängige Variable ist, und einem PID-Handmodusdetektor, falls die gegebene Zeitreihe eine unabhängige Variable ist;

eine Routine, die Vorhersagen für abhängige Variablen ohne eine PID-Zuordnung unter Verwendung von verfügbaren Messungen unabhängiger Variablen erzeugt (260) ;

eine Routine, die die erzeugten Vorhersagen für abhängige Variablen ohne eine PID-Zuordnung gegenüber entsprechenden verfügbaren Messungen abhängiger Variablen bewertet und Daten-Screening-Verfahren anwendet; und

eine Routine, die schlechte Datenscheiben in der gegebenen Zeitreihenvariable unter Verwendung der als schlechte Daten markierten Datensegmente und eines Datenscheibengenerators erzeugt, um die schlechten Datensegmente aus der Zeitreihe auszuschließen.

15. Vorrichtung nach Anspruch 14, bei welcher die Routine, die Datensegmente von Prozessdaten erfasst und ausschließt, die zur Modellqualitätsschätzung und zur Modellidentifikation ungeeignet sind, aufweist:

eine Routine, die Prozessdatenvariablen sammelt und die gesammelten Prozessdatenvariablen in der Datenbank mit einer gegebenen Abtastfrequenz als Zeitreihenvariablen speichert, wobei die Prozessdatenvariablen wenigstens eines enthalten von manipulierten Variablen (MVs), Messungen von Steuervariablen (CVs) des Subjektprozesses, berechneten Werten unabhängiger Variablen, berechneten Werten abhängiger Variablen, allen Datenvektoren des Subjektprozesses und allen PID-Controller-Schleifen;

eine Routine, die Datenstatus, spezielle Werte und Wertegrenzen von Variablen des Subjektprozesses mit ihrer entsprechenden Zeitreihe aus der Datenbank lädt.

**Revendications**

1. Procédé de triage et de sélection de données de manière automatique pour l'identification de modèle et l'adaptation de modèle dans un contrôleur prédictif à plusieurs variables (MPC) (200), le procédé consistant :
étant donné un contrôleur en ligne ayant un modèle existant, dans un processeur :

à charger des données de traitement (210) à partir d'un traitement concerné, et à stocker lesdites données de traitement dans une base de données accessible par ledit modèle ;
**caractérisé en ce que** le procédé consiste à :

utiliser un sélecteur de données à base de règles, détecter et exclure automatiquement des segments de données des données de traitement stockées qui ne conviennent pas pour l'estimation de la qualité du modèle et pour l'identification du modèle ;
valider (270) les segments de données exclus pour minimiser la perte de données provenant de l'exclusion de segments de données mauvaises ;
réparer certains segments de données desdites données de traitement stockées pour maximiser l'utilisation des données dans une application MPC ; et
mettre à jour ledit modèle existant en utilisant des données de traitement résultantes telles que stockées dans la base de données, dans lequel ledit sélecteur de données à base de règles est configuré pour :

trier une variable de série temporelle donnée (230) comme une variable de traitement dépendante ou une variable de traitement indépendante, et appliquer un filtre de triage de données basique pour détecter et marquer des segments de données de la série temporelle comme données bonnes ou données mauvaises en fonction des paramètres donnés de mesure de la qualité des données ;

grouper des variables de série temporelle en fonction de leur boucle PID associée de régulation proportionnelle, intégrale et dérivée ;

comparer des variables de traitement (PV) (250) à leurs points SP de consigne correspondants dans chaque boucle PID, et appliquer des filtres de triage de données ;

générer des prédictions (260) pour des variables dépendantes sans association PID en utilisant des mesures de variables indépendantes disponibles ;

évaluer lesdites prédictions générées pour des variables dépendantes sans association PID par rapport à des mesures de variables dépendantes disponibles correspondantes, et appliquer des procédés de triage de données ; et

identifier et générer des tranches de données mauvaises dans la variable de série temporelle donnée en utilisant les segments de données marqués comme données mauvaises et un générateur de tranches de données, pour exclure lesdits segments de données mauvaises de la série temporelle.

2. Procédé selon la revendication 1, dans lequel l'étape d'utiliser un sélecteur de données à base de règles pour détecter et exclure des segments de données des données de traitement stockées qui ne conviennent pas pour l'estimation de la qualité du modèle et pour l'identification du modèle, comprend les étapes consistant à :

   a. collecter des variables de données de traitement, et stocker des variables de données de traitement ainsi collectées dans ladite base de données à une fréquence d'échantillonnage donnée en tant que variables de série temporelle ;

   b. charger l'état des données, des valeurs spéciales et des limites de valeurs des variables du traitement concerné avec leurs séries temporelles correspondantes à partir de la base de données.

3. Procédé selon la revendication 2, dans lequel des variables de données de traitement incluent au moins l'un de ceux-ci parmi des variables manipulées (MVs), des mesures de variables de contrôle (CVs) du traitement concerné, des valeurs calculées de variables indépendantes, des valeurs calculées de variables dépendantes, tous les vecteurs de données du traitement concerné, et toutes les boucles du contrôleur PID.

4. Procédé selon la revendication 1, dans lequel le triage de données basique inclut au moins l'un de ceux-ci parmi un détecteur de limite basse / haute et de saturation de la sortie (OP) du contrôleur PID, un détecteur de mesures / signaux gelé(e)s si la série temporelle donnée est une variable dépendante, et un détecteur de mode manuel PID si la série temporelle donnée est une variable indépendante.

5. Procédé selon la revendication 1, dans lequel les étapes de comparer des variables de traitement (PV) à leurs points de consigne correspondants (SP) dans chaque boucle PID et d'appliquer des filtres de triage de données, consistent à :

   effectuer une recherche d'association de boucle PID et trouver des SP, PV et OP disponibles parmi toutes les variables de traitement ;

   déterminer si une paire formée de PV et SP ou un triplet formé de PV, SP et sortie de contrôle (OP) est associé(e) à la série temporelle dans une boucle PID ; et

   si la paire formée de PV et SP ou le triplet formé de PV, SP et OP est associé(e) à la série temporelle dans la même boucle PID, utiliser un sélecteur de données à base de règles pour appliquer des filtres de triage de données pour détecter des séquences de données montrant des écarts par rapport à leur SP, et marquer les segments de données correspondants comme données mauvaises.

6. Procédé selon la revendication 2, dans lequel les étapes d'évaluer lesdites prédictions générées pour des variables dépendantes sans association PID par rapport à leurs mesures et d'appliquer des filtres de triage de données, consistent à :
si aucune paire formée de PV et SP ou aucun triplet formé de PV, SP et OP n'est associé(e) à la variable de série temporelle actuelle dans la même boucle PID et si la variable de série temporelle est une variable de traitement dépendante, utiliser des filtres de triage de données pour détecter des segments de données montrant des pics et des écarts dans la tendance mobile, et marquer les segments de données correspondants comme données mauvaises en fonction des filtres donnés de triage de données.

**7.** Procédé selon la revendication 5 ou 6, dans lequel les filtres de triage de données incluent au moins l'un de ceux-ci parmi un détecteur de pics PV si la série temporelle donnée est une variable dépendante, un détecteur de mode manuel PID, un détecteur de mode en boucle fermée SP si la série temporelle donnée est une variable indépendante, et un détecteur de discordance de tendance / de perturbations inconnues.

**8.** Procédé selon la revendication 7, dans lequel un détecteur de discordance de tendance / de perturbations inconnues consiste à :

générer une prédiction du modèle de la variable de série temporelle via un modèle à entrée multiple et sortie unique (MISO) ;
calculer une erreur de prédiction pour des perturbations inconnues ;
détecter si une série temporelle de variable de contrôle (CV) ne correspond pas aux valeurs du modèle MISO prédites ;
détecter si un grand décalage soutenu de la valeur moyenne du CV s'est produit en dehors du mouvement normal, et déterminer s'il est associé à la prédiction du modèle ; et
sélectionner pour l'exclusion, les segments de données de la variable de série temporelle montrant une différence de tendance au-delà de l'erreur de prédiction, et rendre des segments de données sélectionnés en tant que données mauvaises.

**9.** Procédé selon la revendication 1, dans lequel l'étape de valider les segments de données exclus pour minimiser la perte de données provenant de l'exclusion de mauvais segments de données, consiste à :

tester des segments de données mauvaises de ladite série temporelle qui n'ont pas été supprimés par un filtre de données basique, en comparant les qualités du modèle (MQ) lorsque lesdits segments de données mauvaises sont inclus et exclus dans l'identification du modèle ; et
confirmer des segments de données mauvaises en tant que données mauvaises sur la base de la comparaison MQ, sinon démarquer des segments de données mauvaises candidats.

**10.** Procédé selon la revendication 9, dans lequel l'étape de tester des tranches de données mauvaises, consiste à :

définir des segments de données mauvaises en tant que segments de données mauvaises candidats, et générer des segments de données bonnes en excluant des segments de données mauvaises candidats pour chaque variable de série temporelle ;
pour une variable dépendante, configurer une identification du modèle à entrée multiple et sortie unique (MISO), et charger les variables indépendantes en tant qu'entrées et la variable dépendante en tant que sortie dans ledit modèle MISO ;
appliquer lesdits segments de données bonnes ainsi générés au modèle MISO configuré, et calculer un indice de qualité de modèle de référence (MQ) en effectuant une évaluation de la qualité de modèle sur ledit modèle MISO ; et
exécuter une identification de cas MISO sur un segment de données mauvaises candidat parmi lesdits segments de données non supprimés par un filtre de données basique, et calculer un MQ candidat en effectuant une évaluation de la qualité de modèle sur ledit modèle MISO correspondant au segment de mauvaises données candidat.

**11.** Procédé selon la revendication 10, dans lequel l'étape de confirmer des segments de données mauvaises candidats en tant que données mauvaises, consiste à :
étant donné un paramètre réglable en tant que seuil, marquer un segment de données mauvaises candidat comme un segment de données bonnes si la différence entre la MQ de référence et le MQ candidat est à l'intérieur dudit seuil réglable, et supprimer les tranches de données correspondantes d'une liste de tranches de données mauvaises.

**12.** Procédé selon la revendication 9, dans lequel l'étape de réparer certains segments de données desdites données de traitement stockées pour maximiser l'utilisation des données dans une application MPC, consiste à :

pour la variable de série temporelle donnée, sélectionner tous les segments de données mauvaises confirmés qui ont une longueur inférieure à la moitié du temps jusqu'à l'état stationnaire (TTSS) pour l'interpolation ;
corriger des segments dans la série temporelle où des parties de données ont été supprimées par le générateur de tranches de données avec des segments de données interpolés ; et
minimiser les impacts négatifs du remplacement des segments de données mauvaises par des segments de données interpolés, en corrigeant des tranches de données mauvaises avec leurs tranches interpolées avec une connexion fluide entre les points d'extrémité d'un segment de données interpolé.

13. Procédé selon la revendication 12, dans lequel l'étape de corriger des segments, consiste à :

si la variable de série temporelle est une variable indépendante, vérifier les segments de données bonnes qui sont adjacents aux segments de données mauvaises sélectionnés, pour déterminer si les valeurs des échantillons de données bonnes avant un point de départ et après un point final d'un segment de données mauvaises se situent à l'intérieur d'un seuil donné et, si c'est le cas, créer une tranche d'interpolation par interpolation linéaire et remplacer les segments de données mauvaises sélectionnés par la tranche d'interpolation ;
si la variable de série temporelle sélectionnée est une variable dépendante, configurer un cas de modèle MISO avec la variable dépendante et les variables indépendantes associées, et exécuter un cas d'identification MISO à l'aide du modèle MISO résultant pour générer une prédiction de modèle sur la variable dépendante, et créer une tranche interpolée pour des segments de données mauvaises si les valeurs prédictives du modèle sont disponibles pour le segment de mauvaises données ; et
si la variable de série temporelle est une variable dépendante, vérifier les segments de bonnes données qui sont adjacents aux segments de données mauvaises sélectionnés, pour déterminer si les valeurs moyennes calculées sur une longueur donnée avant le point de départ et après le point final d'un segment de données mauvaises se situent à l'intérieur du seuil donné, et si c'est le cas, créer une tranche d'interpolation par interpolation linéaire et remplacer les segments de mauvaises données sélectionnés par la tranche d'interpolation, la tranche d'interpolation étant connectée de manière fluide aux segments de données bonnes.

14. Appareil pour trier et sélectionner automatiquement des données pour l'identification de modèle et l'adaptation de modèle dans un contrôleur prédictif à plusieurs variables (MPC) (200), l'appareil comprenant :

un MPC couplé à un système de traitement et ayant un modèle existant ;
un processeur informatique exécutant des routines dans une mémoire de travail, le processeur informatique étant couplé au contrôleur à plusieurs variables ;
une routine qui accède à des données de traitement à partir d'un traitement concerné et stocke lesdites données de traitement dans une base de données accessible par ledit modèle ;
caractérisé en :

une routine qui détecte et exclut automatiquement des segments de données de données de traitement qui ne conviennent pas pour l'estimation de la qualité du modèle et pour l'identification du modèle ;
une routine qui valide (270) des segments de données exclus pour minimiser la perte de données provenant de l'exclusion de segments de données mauvaises ; et
une routine qui répare certains segments de données de données de traitement pour maximiser l'utilisation de données dans une application MPC ; et
une routine qui, étant donné une variable de série temporelle, détermine la variable de série temporelle comme une variable de traitement dépendante ou comme une variable de traitement indépendante, et applique des filtres de triage de données basiques pour détecter et marquer des segments de données de la série temporelle comme données bonnes ou données mauvaises en fonction des paramètres donnés de la qualité des données ;
une routine qui groupe des variables de série temporelle en fonction de leurs boucles associées de régulation proportionnelle, intégrale et dérivée (PID) ;
une routine qui compare des variables de traitement (PV) (250) à leurs points de consigne correspondants (SP) dans chaque boucle PID, et applique des filtres de triage de données, les filtres de triage de données incluant au moins l'un de ceux-ci parmi : un détecteur de limite basse / haute et de saturation de la sortie (OP) du contrôleur PID, un détecteur de mesures / signaux gelé(e)s si la série temporelle donnée est une variable dépendante, et un détecteur de mode manuel PID si la série temporelle donnée est une variable indépendante ;
une routine qui génère des prédictions (260) pour des variables dépendantes sans association PID, en utilisant des mesures de variables indépendantes disponibles ;
une routine qui évalue lesdites prédictions générées pour des variables dépendantes sans association PID par rapport à des mesures de variables dépendantes disponibles correspondantes, et applique des procédés de triage de données ; et
une routine qui génère des tranches de données mauvaises dans la variable de série temporelle donnée, en utilisant les segments de données marqués comme données mauvaises et un générateur de tranches de données, pour exclure lesdits segments de données mauvaises de la série temporelle.

15. Appareil selon la revendication 14, dans lequel la routine, qui détecte et exclut des segments de données de données de traitement qui ne conviennent pas pour l'estimation de la qualité du modèle et pour l'identification du modèle, comprend :

une routine qui collecte des variables de données de traitement, et stocke des variables de données de traitement ainsi collectées dans ladite base de données à une fréquence d'échantillonnage donnée en tant que variables de série temporelle, les variables de données de traitement incluant au moins l'un de ceux-ci parmi : des variables manipulées (MVs), des mesures de variables de contrôle (CVs) du traitement concerné, des valeurs calculées de variables indépendantes, des valeurs calculées de variables dépendantes, tous les vecteurs de données du traitement concerné, et toutes les boucles de contrôleur PID ;
une routine qui charge l'état des données, des valeurs spéciales et des limites de valeurs des variables du traitement concerné avec leurs séries temporelles correspondantes à partir de la base de données.

FIG. 1

CV
MEASUREMENTS
150

OPTIMAL
TARGETS
130

MVC CONTROLLER/
AUTOMATED STEP
TESTER

(MODEL)

110

CONTROL/
TEST SIGNALS
101

MVs

PROCESS WITH CHANGES 120

1x

3x

FEED -
PROPERTIES
(T1, H1, Q1)

FEED -
PROPERTIES
(T2, H2, Q2)

OPERATION A

OPERATION B

CVs

140

1. AUTOMATED
DATA SELECTION;
2. ON-LINE MODEL
IDENTIFICATION

DATABASE
102

EP 2 825 920 B1

24

FIG. 2

300

BEGIN

LOAD A TIME SERIES $x(t)$, set $t=1$;
Count=0, Start=0, Length=0 ——301

303

NO ——— STATUS FLAG $F(t)<0$ ? ——— YES

307
If (Length>0) Create New Slice:
Slice(Start, Length, Type);
Reset Length=0;

305
Length=Length+1;
If (F(t-1)≥0), Set Start =t;
Type=Status

$t=t+1$ ——306

END

FIG. 3

FIG. 4

EP 2 825 920 B1

FIG. 5

EP 2 825 920 B1

FIG. 6

EP 2 825 920 B1

FIG. 7

FIG. 8

EP 2 825 920 B1

FIG. 9A

FIG. 9B

FIG. 10

EP 2 825 920 B1

FIG. 11

FIG. 12

EP 2 825 920 B1

36

FIG. 13

FIG. 14

FIG. 15

FIG. 16

FIG. 17

EP 2 825 920 B1

FIG. 18A

1803

1804

ZOOM IN
ZOOM OUT

ADD BAD SLICE TO VECTOR
ADD BAD SLICE TO DATASET

EDIT BAD SLICE

DELETE SLICE

3/12/2012 3/12/2012 3/12/2012 3/12/2012 3/12/2012

10:00:00 10:30:00 11:00:00 11:30:00

80 78 76 74

FIG. 18B

## Edit Bad Slice -- Webpage Dialog ☒

**Slice of Vector OHPVALV**
Time Range: 3/12/2012 09:45:34 - 3/12/2012 11:45:34
Sample Period: 10 (sec)

⊙ Sample Index ○ Date/Time

Begin Index: 293 ⎯1805

End Index: 450 ⎯1806

Description: OHPVALV Slice 1

OK 1807 Cancel 1808

## FIG. 18C

700

710-1 — COMPUTER CLIENT 1
710-2 — COMPUTER CLIENT 2
710-N — COMPUTER CLIENT N

NETWORK 750

COMPUTER SERVER (APPARATUS INSTALLED) — 720

DISTRIBUTED CONTROL SYSTEM — 730

PROCESS UNIT 1 — 740-1
PROCESS UNIT 2 — 740-2
● ● ●
PROCESS UNIT M — 740-M

## FIG. 19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61646095
- US 78605210
- US 61217370
- US 20110130850 A1
- US 61596459
- US 7209793 B

- US 6819964 B
- US 20080183311 A
- US 13760949 B
- US 786052
- US 12786052 B

**Non-patent literature cited in the description**

- **LENNART LJUNG.** System Identification - Theory for The Users. Prentice Hall, 1999

- **DANIEL PERETZKI ; ALF J. ISAKSSON ; ANDRE CARVALHO BITTENCOURT ; KRISTER FORSMAN.** Data Mining of Historic Data for Process Identification. *AIChE Annual Meeting,* 2011